(19) Europäisches Patentamt
European Patent Office
Office européen des brevets

(11) EP 2 017 087 A1

(12) **EUROPEAN PATENT APPLICATION**
published in accordance with Art. 153(4) EPC

(43) Date of publication:
**21.01.2009 Bulletin 2009/04**

(21) Application number: **07742937.1**

(22) Date of filing: **08.05.2007**

(51) Int Cl.:
***B41N 6/00** (2006.01)*
***B41F 30/00** (2006.01)*
***B41N 7/00** (2006.01)*
***B41N 10/00** (2006.01)*

(86) International application number:
**PCT/JP2007/059502**

(87) International publication number:
**WO 2007/129704 (15.11.2007 Gazette 2007/46)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **08.05.2006 JP 2006129655**
**14.11.2006 JP 2006308306**

(71) Applicant: **Asahi Kasei Chemicals Corporation**
**Tokyo 101-8101 (JP)**

(72) Inventors:
- **TOMITA, Yoko**
  **Tokyo 100-8440 (JP)**
- **TOMEBA, Kei**
  **Tokyo 100-8440 (JP)**
- **YAMADA, Hiroshi**
  **Tokyo 100-8440 (JP)**
- **SHIMURA, Tadashi**
  **Tokyo 100-8440 (JP)**
- **MATSUMOTO, Masaki**
  **Tokyo 100-8440 (JP)**

(74) Representative: **Strehl Schübel-Hopf & Partner**
**Maximilianstrasse 54**
**80538 München (DE)**

# (54) CUSHIONING MATERIAL FOR PRINTING

(57) A cushion for printing or a cushioning layer for printing plate manufactured using a cushioning material for printing having a storage elastic modulus (E') of 1.0 $\times$ $10^8$ Pa or greater at 20°C and 1000 Hz enables high-speed printing while keeping a printing quality.

Fig 1.

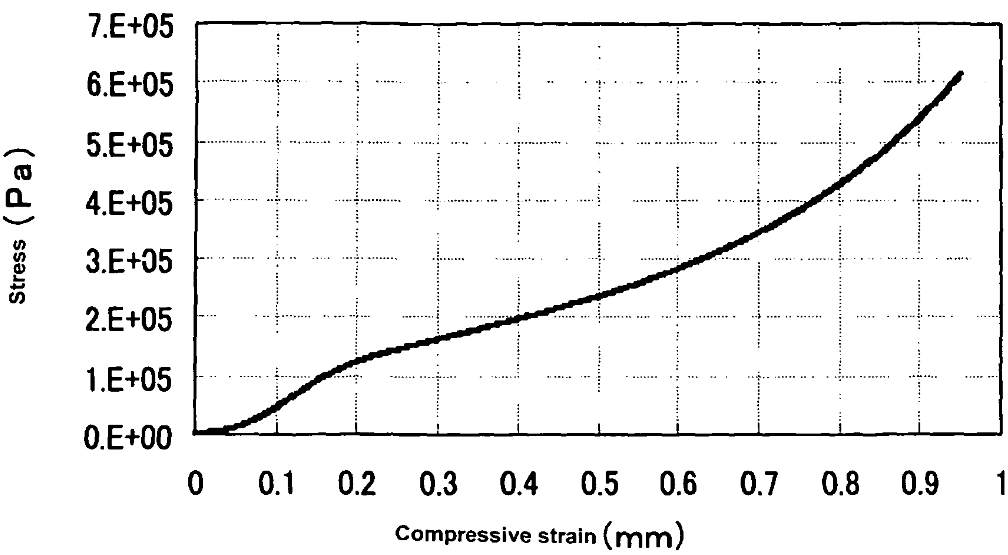


EP 2 017 087 A1

## Description

### Technical Field

The present invention relates to a cushioning material for printing, more specifically, a material for manufacturing a cushioning layer of a member to be used for printing such as a blanket roll, an ink supply controlling roll, a cushion for printing to be used while being placed between a printing plate and a cylinder of a printing machine during printing, or a printing plate.
Particularly, the present invention relates to a material suited for manufacturing a cushion for printing or a cushioning layer of a printing plate.

### Background Art

For soft wrapping of paper or film, printing such as flexographic printing has been used widely in recent years. The printing quality of flexographic printing or the like is usually determined by a balance among a high solid density, high ink coverage in solid areas, dots and lines with less gain, and optimal reproduction of reverse lines in solids. As the deformation of a printing plate becomes larger, it becomes difficult to reproduce a desired image on a printing medium. A cushion is therefore placed under a printing plate in order to keep a printing quality by reducing excessive deformation which will otherwise occur by oscillation of a printing machine or the like. The oscillation becomes severe with an increase in a printing speed. The printing speed is typically from 50 m/min to 300 m/min and it rarely exceeds 300 m/min. In view of a recent drastic increase in the printing speed for raising the productivity, maintenance of a printing quality becomes an important problem for printing industries. There is therefore a demand for maintenance of a printing quality at high-speed printing and improvement in the performance of a cushion for absorbing oscillation.
Although sheet-like polyethylene or thermosetting polyurethane is typical as a cushioning material for reducing excessive deformation of a printing plate, use of it inevitably leads to deterioration in the quality of solids and therefore, deterioration in a printing quality, because an ink transfer time becomes shorter with a decrease in contact time between a plate and a printing medium.
Patent Document 1 describes a process of forming a cushioning layer by heating, in a step of mixing thermally expandable capsules in a resin composed mainly of a styrene copolymer type elastomer, thermoplastic elastomer, thermoplastic polyurethane, acrylonitrile type elastomer or NBR elastomer and extruding the resulting mixture into a sheet, the resin to cause thermal expansion of the thermally expandable capsules. The cushioning layer obtained by this process has however problems that it does not have a high cushioning performance because the degree of expansion of the thermally expandable capsules inevitably varies depending on the temperature distribution so that the cushioning layer does not have uniform physical properties and cannot reduce the impact at the time of high-speed printing sufficiently,.
Patent Document 2 describes a cushioning material for flexographic printing which is made of polyether polyurethane and capable of restoring 99.5% of the original thickness in 0.1 second. When it is applied to a printing machine operated at an ordinarily employed high speed of 600 m/min and having a circumferential length of 500 mm, however, the restoring rate of the cushioning material cannot keep up with the operation speed, which leads to deterioration of a printing quality.
Patent Document 3 describes a cushioning material made of a polyurethane foam prepared using a reactive silicone foam stabilizer
Patent Document 4 describes a cushion obtained by mechanically foaming a thiol-containing resin.
Patent Document 5 describes a cushion for flexographic printing which substantially restores the original thickness and does not lose its compression property even if used for a long period of time. It is formed using a polymer of a conjugated diolefin hydrocarbon or a thermoplastic elastomeric block copolymer having a certain Shore A hardness and a total volume ratio of voids.

These cushions for printing however are not satisfactory from the viewpoint of impact absorption and retention of a printing quality.
Each of Patent Documents 6, 7 and 8 describes a cushioning layer obtained by mixing thermally expandable capsules in a photosensitive resin composition composed mainly of a thermoplastic elastomer.
Even these cushions for printing do not have sufficient impact absorption and retention property of a printing quality under the recent situation (Non-patent Document 1) where printing is performed at a speed as high as 1000 m/min.
In the fields of flexographic printing and offset printing, a solvent ink has been used frequently and an ink stuck to a plate surface is sometimes removed with a solvent type detergent after completion of the printing. In a printing step

using such a solvent ink or a cleaning step with a solvent type detergent, the solvent penetrates into a cushioning layer, which may cause swelling of the cushioning layer or deteriorate mechanical physical properties of it due to extraction of its component with the solvent. The cushioning material for printing is required to overcome such problems.

Patent Document 1: Published Japanese Translations of PCT International Patent Publication No. 2003-519036
Patent Document 2: U.S Patent No. 5325776
Patent Document 3: Japanese Patent Laid-Open No. 2005-349754
Patent Document 4: WO96-40528
Patent Document 5: Japanese Patent Laid-Open No. Hei 11-180065
Patent Document 6: Japanese Patent Laid-Open No. 2004-157399
Patent Document 7: U.S. Patent No. 5476712
Patent Document 8: Japanese Patent Laid-Open No. 2004-255811
Non-patent Document 1: Convertech, p23, published in August, 2006

## Disclosure of the Invention

### Problems to be Solved by the Invention

An object of the present invention is to provide a cushion for printing or a cushioning layer of a printing plate which enables high-speed printing while keeping an adequate printing quality.
Another object of the present invention is to provide a cushioning material for printing excellent in solvent resistance and mechanical physical properties.

The present inventors have proceeded with an extensive investigation with a view to overcoming the above-described problem. As a result, it has been found that by using a material having a storage elastic modulus (E') of $1.0 \times 10^8$ Pa or greater at 20°C and 1000 Hz, a cushion for printing or a cushioning layer of a printing plate which enables high-speed printing while keeping an adequate printing quality can be produced, leading to the completion of the present invention.
It has also been found by the present inventors that by using a photocured material of a specific photosensitive resin composition, a cushioning layer of members used for printing such as cushion for printing excellent in solvent resistance characteristics, mechanical physical properties, and compression characteristics can be produced, leading to the completion of the present invention.

In a first aspect of the present invention, there is thus provided a cushioning material for printing having a storage elastic modulus (E') of $1.0 \times 10^8$ Pa or greater at 20°C and 1000 Hz. In a second aspect of the present invention, there is also provided a cushioning material for printing which contains a cured material of a photosensitive resin obtained by photocuring a photosensitive resin composition (A) containing a resin (a) which is a polymer compound having, in the molecule thereof, at least one bond selected from a carbonate bond and an ester bond and/or having at least one molecular chain selected from an aliphatic saturated hydrocarbon chain and an aliphatic unsaturated hydrocarbon chain, having at least one bond selected from a urethane bond and an amide bond or a urea skeleton, and having a number-average molecular weight of 1000 or greater and not greater than 300000, (b) an organic compound having, in the molecule thereof, a polymerizable unsaturated group and having a number-average molecular weight of 100 or greater and less than 1000, (c) a photopolymerization initiator, and (d) organic fine particles having an average particle diameter of 0.1 μm or greater and not greater than 200 μm or (e) air bubbles having an average diameter of 0.1 μm or greater and not greater than 200 μm; being in liquid form at 20°C; and having a viscosity at 20°C of 100 Pa•s or greater and not greater than 50 kPa•s.

### Effect of the Invention

Use of a cushion for printing or a cushioning layer for printing produced from the cushioning material for printing according to the first aspect of the present invention enables to achieve a good quality of solids and good dot reproduction even when printing is performed at high speed.
Use of the cushioning material for printing according to the second aspect of the present invention enables provision of a sheet-like or cylindrical cushion for printing plate or cushion for printing blanket excellent in solvent resistance characteristics and mechanical physical properties.

### Best Mode for Carrying out the Invention

The present invention will hereinafter be described specifically.

The following embodiments are exemplary only and should not be considered as limiting the scope of the present invention. The present invention can be embodied in various forms without departing from its spirit.

The cushioning material for printing according to the first aspect of the present invention has a storage elastic modulus (E') of $1.0 \times 10^8$ Pa or greater at 20°C and 1000 Hz as measured by dynamic viscoelasticity measurement.

Since a cushion for printing is a material for reducing impact,as a raw material, a material having low impact resilience is generally used. The material having low impact resilience is tend to convert impact to heat so that it generally has a high loss elastic modulus (E"). It has been found, however, that when the storage elastic modulus (E') is lower than the loss elastic modulus (E"), the cushion which has deformed by impact does not restore the original shape and deteriorates a printing quality.

In other words, it has been found that a cushion for printing made of a material only having a high loss elastic modulus (E") cannot achieve sufficient improvement in a printing quality and that the cushion contributes to improvement in a printing quality only when its material has an increased storage elastic modulus (E') together with an increased loss elastic modulus (E").

It has also been found that when the storage elastic modulus (E') of the cushioning material for printing is $1.0 \times 10^8$ Pa or greater at 1000 Hz which is a center range of oscillation (from 100 to 1800 Hz) of the printing plate at the time of high-speed printing, application of a printing pressure to the printing plate does not deteriorate the printing quality because it does not cause excessive deformation of the printing plate. The above storage elastic modulus (E') corresponds to about 10 times the storage elastic modulus (E') of generally used cushioning materials for printing.

The storage elastic modulus (E'), at 20°C and 1000 Hz, of the cushioning material for printing is more preferably from $3.0 \times 10^8$ to $1.0 \times 10^9$ Pa, still more preferably from $4.0 \times 10^8$ to $1.0 \times 10^9$ Pa.

In the present invention, the loss elastic modulus (E"), at 20°C and 1000 Hz, of the cushioning material for printing as measured by dynamic viscoelasticity measurement is preferably $1.0 \times 10^7$ Pa or greater, more preferably $2.0 \times 10^7$ to $1.0 \times 10^{10}$ Pa, still more preferably $8.0 \times 10^7$ to $1.0 \times 10^9$ Pa from the viewpoint of impact absorption.

In addition, the loss tangent (tanδ) (E"/E'), at 20°C and 1000 Hz, of the cushioning material for printing is preferably 0.2 or greater and not greater than 0.6. When the raw material for the cushioning material for printing is a photocured material of a photosensitive resin composition which will be described later, the tanδ can be controlled, for example, by adjusting a ratio of monomers or an amount of capsular fine particles. The loss tangent is presumed to reach approximately 0.6 while keeping the compression characteristics and permanent compression strain within adequate ranges.

When the loss tangent (tanδ) of the cushioning material for printing falls within the above-described range, the cushion for printing manufactured from it is suited for high-speed printing, because the cushion does not permanently deform and can absorb impact sufficiently. The loss tangent (tanδ) of the cushioning material for printing is preferably 0.31 or greater and not greater than 0.6, more preferably 0.32 or greater and not greater than 0.60.

In the present invention, the storage elastic modulus or loss elastic modulus at 20°C and 1000 Hz can be measured in the following manners.

A sample is set in a tension type or compression type geometry of a dynamic viscoelasticity measuring instrument. The storage elastic modulus and the loss elastic modulus are measured at every 10°C from 30°C to -60°C and at sinusoidal frequency of from 0.01 Hz to 15.915 Hz under conditions of an effective measurement length of 22.6 mm and a strain amplitude of 0.1 % when the tensile type is used and 0.5% when the compression type is used. Based on the time-temperature conversion principle in accordance with the application of the dynamic viscoelasticity measuring instrument, a master curve is constructed with 20°C as its reference temperature. From the master curve thus obtained, the storage elastic modulus and loss elastic modulus at 1000 Hz are read.

In the present invention, the impact resilience of the cushioning material for printing at 23°C as measured by a falling ball measurement method is preferably 20% or less. Within this range, the cushion for printing manufactured from the material can keep shock absorbing properties during printing. It is preferably 3% or greater and not greater than 17%, more preferably 5% or greater and not greater than 15%.

The impact resilience as measured by the falling ball measurement method is a value calculated from a rebound height S (mm) of an iron ball in accordance with the following equation:

$$\text{Impact resilience (\%)} = 100 \times (S/300)$$

A 50 mm $\times$ 50 mm square sample having a thickness of 2 mm is prepared in accordance with ASTM-D3574-86 and the bottom surface thereof is fixed with a double-sided tape ("ST-416", trademark, product of 3M Company) to a position which is presumed to be the center where the iron ball falls. An iron ball having a diameter of 8 mm is allowed to fall by gravity onto the plate from the height of 300 mm. The rebound height of the iron ball is measured three times and an average of the values is used as a measurement value S (mm). It was confirmed after the measurement that

the sample does not have, on the surface thereof, a dent due to the iron ball.

The cushioning material for printing according to the first aspect of the present invention may be composed of any raw material insofar as it has a storage elastic modulus of $1.0 \times 10^8$ Pa or greater at 20°C and 1000 Hz.

The cushioning material for printing in the present invention is composed of preferably a cured material of a resin. Preferred examples of the cured material of a resin include those obtained by heating and thereby curing a thermosetting resin composition and those obtained by photocuring a photosensitive resin composition by exposure to light.

Examples of the thermosetting resin composition include materials containing a compound having a functional group, such as epoxy group or oxetane group, which undergoes a ring-opening polymerization reaction and materials containing a compound having a reactive double bond or triple bond. These materials may comprise, as a thermal polymerization initiator, a compound which decomposes by heat and generates a radical chemical species or a compound which generates an acid or a base by heat. As the thermal polymerization initiator, a latent thermal polymerization initiator which starts a polymerization reaction when an acid or a base is released from a microcapsule molten or broken by an increase in its temperature to a certain temperature or greater can be used. Use of the latent thermal polymerization initiator is preferred from the viewpoint of controllability of the polymerization reaction. As heat sources to be used for initiating a thermal polymerization reaction, heaters, infrared radiation, microwaves, and the like can be used.

Particularly in the present invention, use of a photocured material of a resin composition which is cured by a light, that is, the photosensitive resin composition (A), as a cushioning material for printing is preferred.

A process of curing, for example, crosslinking and curing, the photosensitive resin composition (A) by using a light is preferred because it has an advantage that the cured material can retain its mechanical physical properties as it does not include steps such as a heating step so that a curing reaction is completed in a short time. Examples of the light to be used for curing include high energy radiation such as visible light, ultraviolet light, electron beam, X-ray, and molecular beam. Examples of a light source for the visible light or ultraviolet light include metal halide lamp, high-pressure mercury lamp, ultra-high pressure mercury lamp, UV fluorescent lamp, carbon arc lamp, xenon lamp, zirconium lamp, and solar light. Curing can also be performed by another known manner. Curing may be performed by exposure to a plurality of light sources. In the invention, the term "photocured material" means a material obtained by photocuring.

Such a photosensitive resin composition (A) constituting the cushioning material for printing is especially preferably a resin in liquid form at 20°C. The term "resin in liquid form" as used herein means a polymer which flows and moves easily and can be solidified while keeping the shape deformed by cooling. This term is in contrast with the term "elastomer" which, by the application of an external force, deforms instantaneously according to the external force and restores the original shape in a short period of time when the external force is removed.

The photosensitive resin (A) in liquid form is preferred because it can be molded or formed into a sheet or a cylinder with good thickness accuracy or dimensional accuracy. In the present invention, the photosensitive resin composition (A) has a viscosity at 20°C of 100 Pa•s or greater and not greater than 50 kPa•s, more preferably 200 Pa•s or greater and not greater than 20 kPa•s, still more preferably 200 Pa•s or greater and not greater than 8 kPa•s.

If the photosensitive resin composition (A) has a viscosity of 100 Pa•s or greater, the cushion manufactured from it has a sufficient mechanical strength. Even when a cylindrical cushion is formed, its shape can be easily maintained and easily processed. If the photosensitive resin composition (A) has a viscosity of 50 kPa•s or less, it can be deformed easily even at normal temperature, it can be processed easily, and can be molded or formed easily into a sheet-like or cylindrical cushion. Thus, the molding or forming process is carried out conveniently.

In particular, when a cushion for printing is formed by applying the photosensitive resin composition (A) to a cylindrical substrate, the photosensitive resin composition (A) has a viscosity of preferably 100 Pa•s or greater, more preferably 200 Pa•s or greater, still more preferably 500 Pa•s or greater in order to prevent a phenomenon such as dripping due to gravity and thereby obtain a cushion for printing having a high plate-thickness accuracy.

When the photosensitive resin composition (A) to be used in the invention is in liquid form at 20°C, it has preferably thixotropy, because if so, a predetermined thickness can be kept without causing dripping due to gravity when a layer of the photosensitive resin composition is formed on the cylindrical substrate.

The photosensitive resin composition (A) comprise preferably organic fine particles (d) having an average particle diameter of 0.1 μm or greater and not greater than 200 μm or air bubbles (e) having an average diameter of 0.1 μm or greater and not greater than 200 μm. The average particle diameter (average diameter) of the organic fine particles (d) or the air bubbles (e) is preferably 1 μm or greater and not greater than 150 μm, more preferably 10 μm or greater and not greater than 100 μm. Average particle diameters (average diameters) of the organic fine particles (d) or the air bubbles (e) within the above-described range enable sufficient absorption of impact caused by a printing pressure applied onto a printing plate during printing. As a result, a high quality print can be obtained.

The average particle diameter or average diameter of the organic fine particles (d) or the air bubbles (e) is an average of major axes as measured by microscopic observation. Described specifically, major axes of the organic fine particles (d) or the air bubbles (e) are measured by adjusting the magnification of the microscope so that about 50 organic fine particles (d) or air bubbles (e) come in view of the microscope. Use of a microscope having a length measuring function is preferred, but the dimension may be measured based on the photograph taken with a camera.

In the present invention, the organic fine particles (d) are fine particles made of an organic compound. Although no particular limitation is imposed on them, preferred examples of the organic fine particles (d) include capsular fine particles which are hollow inside, polymer fine particles which are not hollow inside, polymer fine particles containing fine air bubbles therein, and porous polymer fine particles.

When the capsular fine particles which are hollow inside are used, organic fine particles having inorganic fine particles bonded onto the surface of capsular fine particles are especially preferred from the viewpoint of resistance against the compound constituting the photosensitive resin composition (A) and handling ease. Use of capsular fine particles having, on the surface thereof, inorganic fine particles prevents easy dissolution of them in the photosensitive resin composition (A) and enables stable storage for a long period of time. In addition, the specific gravity of the resulting capsular fine particles increases, which facilitates the handling of them during mixing with the resin.

The inorganic fine particles present on the surface of the capsular fine particles have an average particle diameter of preferably 10 nm or greater and not greater than 30 μm, more preferably 0.1 μm or greater and not greater than 20 μm, still more preferably 0.5 μm or greater and not greater than 10 μm. Examples of the material of the inorganic fine particles include silica, alumina, calcium carbonate, zeolite, magnesium hydroxide, and zirconium silicate.

The organic fine particles (d) or the air bubbles (e) to be used in the present invention are not necessarily truly spherical, but are preferably spherical. The spherical shape includes a shape of a true sphere deformed by compression in at least one direction.

In order to permit the air bubbles (e) to stably exist in the photosensitive resin composition (A) to be used in the present invention, mixing of ultrafine particles having an average particle diameter of 10 nm or greater and not greater than 1 μm is preferred. The average particle diameter is more preferably 10 nm or greater and not greater than 0.5 μm, still more preferably 10 nm or greater and not greater than 100 nm. Although the material of the ultrafine particles is not limited particularly, examples include silica, alumina, zeolite, calcium carbonate, magnesium hydroxide, and zirconium silicate. The ultrafine particles having a surface subjected to hydrophobic treatment with a silane coupling agent are preferred, because they are effective for maintaining the air bubbles (e) stably for long hours. A content of the ultrafine particles in the total weight of the photosensitive resin composition (A) is preferably 0.1 wt.% or greater and not greater than 10 wt.%, more preferably 0.2 wt.% or greater and not greater than 5 wt. %, still more preferably 0.5 wt. % or greater and not greater than 3 wt. %.

In the present invention, the air bubbles (e) are mixed in the photosensitive resin composition (A), for example, by stirring the photosensitive resin composition (A) in liquid form forcibly, blowing off air or an inert gas into the photosensitive resin composition (A) in liquid form, foaming the photosensitive resin composition (A) with a chemical foaming agent, or foaming the photosensitive resin composition (A) by reducing the pressure of a gas dissolved in the photosensitive resin composition (A) in liquid form.

The air bubbles (e) may be either continuous air bubbles or independent air bubbles, but independent air bubbles are more preferred from the viewpoint of securing mechanical physical properties. The term "continuous air bubbles" as used herein means air bubbles which are connected to each other, while the term "independent air bubbles" means air bubbles present independently. The forced stirring of the photosensitive resin composition facilitates formation of continuous air bubbles. When the photosensitive resin composition is foamed with a chemical foaming agent or microcapsules are added to the photosensitive resin composition, independent air bubbles are formed easily.

In the present invention, the photosensitive resin composition (A) comprises preferably a resin (a), an organic compound (b), and a photopolymerization initiator (c).

Use of, as the resin (a), a polymer compound having, in the molecule thereof, at least one bond selected from a carbonate bond and an ester bond and/or having at least one molecular chain selected from an aliphatic saturated hydrocarbon chain and an aliphatic unsaturated hydrocarbon chain, and having at least one bond selected from a urethane bond and an amide bond or a urea skeleton is preferred because resistance against an ester-solvent-containing ink to be used in flexographic printing or a hydrocarbon-solvent-containing ink to be used in offset printing can be achieved.

Use of, as the resin (a), a polymer compound having, in the molecule thereof, a carbonate bond is preferred, because the storage elastic modulus of the cushioning material for printing can be adjusted easily to $1.0 \times 10^8$ Pa or greater.

Use of, as the resin (a), the polymer compound further having, in the molecule thereof, at least one bond selected from an ester bond, a urethane bond, and an amide bond and/or a urea skeleton and/or at least one molecular chain selected from an aliphatic saturated hydrocarbon chain and an aliphatic unsaturated hydrocarbon chain is also preferred.

Use of, as the resin (a), a polymer compound having, in the molecule thereof, a carbonate bond and an ester bond and/or having at least one molecular chain selected from an aliphatic saturated hydrocarbon chain and an aliphatic unsaturated hydrocarbon chain, and having at least one bond selected from a urethane bond and an amide bond or a urea skeleton is especially preferred.

The cushioning material for printing manufactured using the resin containing such a polymer compound can easily have a storage elastic modulus of $1.0 \times 10^8$ Pa or greater and at the same time, can have resistance against an ester-solvent-containing ink to be used in flexographic printing or a hydrocarbon-solvent-containing ink to be used in offset printing.

In order to introduce a carbonate bond into the molecular chain of the resin (a) to be used in the present invention, aliphatic polycarbonate diols such as 4,6-polyalkylene carbonate diol, 8,9-polyalkylene carbonate diol, and 5,6-polyalkylene carbonate diol can be used as a monomer component to be used for preparation of the resin (a). An aliphatic polycarbonate diol having, in the molecule thereof, an aromatic molecular structure may also be used.
In this case, an urethane bond can be introduced by increasing the molecular weight further by the condensation reaction of the terminal hydroxyl group with a diisocyanate compound such as tolylene diisocyanate, diphenylmethane diisocyanate, hexamethylene diisocyanate, isophorone diisocyanate, dicyclohexylmethane diisocyanate, tetramethylxylene diisocyanate, xylene diisocyanate, naphthalene diisocyanate, trimethylhexamethylene diisocyanate, p-phenylene diisocyanate, cyclohexylene diisocyanate, lysine diisocyanate, or triphenylmethane diisocyanate, or a triisocyanate compound.
The terminal hydroxyl group or isocyanate group may also be used for introducing a polymerizable unsaturated group.
For the introduction of an ester bond into the molecular chain of the resin (a) to be used in the present invention, it is possible to introduce a polyester such as a polyester available by the condensation reaction of a dicarboxylic acid compound and a compound having, in the molecule thereof, two or more hydroxyl groups which compounds are used as monomer components for the preparation of the resin (a) or a polyester such as polycaprolactone. Examples of the dicarboxylic acid compound include adipic acid, phthalic acid, malonic acid, succinic acid, itaconic acid, oxalic acid, glutaric acid, pimeric acid, suberic acid, azelaic acid, sebacic acid, fumaric acid, isophthalic acid and terephthalic acid and examples of the compound having, in the molecule thereof, two or more hydroxyl groups include ethylene glycol, diethylene glycol, polyethylene glycol, propylene glycol, polypropylene glycol, trimethylene glycol, 1,4-butanediol, 1,5-pentanediol, 1,6-hexanediol, 1,7-heptanediol, 1,8-octanediol, 1,9-nonanediol, 1,10-decanediol, piconal, cyclopentanediol, and cyclohexanediol.
In this case, a urethane bond can also be introduced by polymerizing further by the condensation reaction between the terminal hydroxyl group or carboxyl group and the above-described diisocyanate compound.
The terminal hydroxyl group or carboxyl group may be used for introduction of a polymerizable unsaturated group.
In order to introduce a urea skeleton in the molecular chain of the resin

(a) to be used in the present invention, urea and formaldehyde may be used as monomer components for the preparation of the resin (A) and may be subjected to a condensation reaction. A compound having a functional group reactive with the amino group formed at the terminal may be condensed further.
In order to introduce an amide bond into the molecular chain of the resin (a) to be used in the present invention, a diamine compound and a dicarboxylic acid compound used as the monomer components to be used for the preparation of the resin (a) may be subjected to a condensation reaction. Examples of the diamine compound include aliphatic diamine compounds such as ethylenediamine, trimethylenediamine, tetramethylenediamine, pentamethylenediamine, hexamethylenediamine, 1,7-diaminoheptane, 1,8-diaminooctane, 1,9-diaminononane, and 1,10-diaminodecane; and aromatic diamine compounds such as o-phenylenediamine, m-phenylenediamine, and p-phenylenediamine. Examples of the dicarboxylic acids include aliphatic saturated dicarboxylic acid compounds such as oxalic acid, malonic acid, succinic acid, glutaric acid, adipic acid, pimelic acid, suberic acid, azelaic acid and sebacic acid; aliphatic unsaturated dicarboxylic acid compounds such as maleic acid, fumaric acid, and itaconic acid; and aromatic dicarboxylic acid compounds such as phthalic acid, isophthalic acid, and terephthalic acid.

Examples of the aliphatic hydrocarbon chain or aliphatic unsaturated hydrocarbon chain to be introduced into the molecular chain of the resin (a) to be used in the present invention include molecular structures such as polybutadiene, polyisoprene, hydrogenated polybutadiene, partially-hydrogenated polybutadiene, hydrogenated polyisoprene, partially hydrogenated polyisoprene, polyethylene, polypropylene, polyvinyl chloride, and polyviylidene chloride. Polymers having a further polymerized can be formed by using, as a starting raw material, a polymer compound having, as a main chain thereof, the above-described molecular structure and, as both terminals thereof, at least one functional group selected from a hydroxyl group, an amino group, a carboxyl group, and an isocyanate group and carrying out a condensation reaction between the polymer compound and a compound having a functional group reactive with the above-described functional group. The above-described functional group may be used for introducing, at the end of the compound, a polymerizable unsaturated group.
The resin (a) to be used in the present invention has a number-average molecular weight of preferably 1000 or greater and not greater than 300000. A preferable range of the number-average molecular weight of the resin (a) is 2000 or greater and not greater than 100000, more preferably 5000 or greater and not greater than 50000. When the number-average molecular weight of the resin (a) is 1000 or greater, a cushion manufactured by crosslinking has sufficient strength and a printing plate using it is durable after repeated use. When the number-average molecular weight of the resin (a) is not greater than 300000, on the other hand, a sheet-like or cylindrical cushion can be manufactured without causing an excessive increase in the viscosity of the photosensitive resin composition (A) during forming or molding. The term "number-average molecular weight" as used herein is determined by a value measured using gel permeation

chromatography and calibrated with polystyrene having a known molecular weight.

The resin (a) to be used in the present invention has, in the molecule thereof, preferably a polymerizable unsaturated group. The term "polymerizable unsaturated group" means a polymerizable functional group that is involved in a radical or addition polymerization reaction. The resin (a) is especially preferably a polymer having 0.3 or more, per molecule, of polymerizable unsaturated group on an average. When the polymer has 0.3 or more polymerizable unsaturated group per molecule, the cushion available from it has excellent mechanical strength. The cushion also has good durability so that it can withstand repeated use. In view of the mechanical strength of the cushion, the number of the polymerizable unsaturated group of the resin (a) is more preferably 0.5 or more per molecule, with the number exceeding 0.7 being more preferred. In the resin (a) of the present invention, the polymerizable unsaturated group is preferably bonded to the end of the main chain of the polymer compound or the end of the side chain of the polymer compound, or bonded directly to the main chain or side chain of the polymer compound. An average of the number of the polymerizable unsaturated groups contained in one molecule of the resin (a) can be determined by molecular structure analysis using nuclear magnetic resonance spectroscopy (NMR spectroscopy).

The resin (a) having, in the molecule thereof, such a polymerizable unsaturated group may be prepared, for example, by introducing a polymerizable unsaturated group directly into the molecular end of the resin. Preferred examples of an alternative process include a process of reacting a compound having a plurality of reactive groups selected from a hydroxyl group, an amino group, an epoxy group, a carboxyl group, an acid anhydride group, a ketone group, a hydrazine residue, an isocyanate group, an isothiocyanate group, a cyclic carbonate group, and an alkoxycarbonyl group and having a molecular weight of about several thousands with a binder (for example, polyisocyanate when the reactive group is a hydroxyl group or an amino group) having a plurality of functional groups bondable to the above-described reactive groups, and after adjustment of the molecular weight and conversion to the terminal bonding group, reacting the resulting compound with an organic compound having a polymerizable unsaturated group and a functional group reactive with the terminal bonding group, thereby introducing the polymerizable unsaturated group into the molecular end.

The resin (a) can also be prepared using a polymer compound having no polymerizable unsaturated group and introducing a polymerizable unsaturated group into the molecule by a chemical reaction such as substitution reaction, elimination reaction, condensation reaction, or addition reaction. In this case, examples of the polymer compound having no polymerizable unsaturated group include polymer compounds having, on the main chain thereof, a hetero atom, and random copolymers or block copolymers obtained by synthesis of a plurality of monomer components. A mixture of a plurality of polymer compounds having a polymerizable unsaturated group introduced into the molecule thereof can also be used.

The resin (a) is preferably a liquid resin at 20°C, because if so, the photosensitive resin composition (A) is also in liquid form at 20°C. This enables to achieve good thickness accuracy and dimensional accuracy when the resulting cushion material is molded or formed into a sheet or cylinder.

Particularly, for manufacturing a cushion for printing used for a flexographic printing plate in which a flexible relief image is necessary, partial use of a liquid resin having a glass transition temperature preferably not greater than 20°C, more preferably not greater than 0°C as the resin (a) is preferred. Examples of such a liquid resin include compounds having a hydrocarbon chain such as polyethylene, polybutadiene, hydrogenated polybutadiene, and polyisoprene; polyester compounds having an ester bond such as adipate and polycaprolactone; compounds having an aliphatic polycarbonate structure; and compounds having a polydimethylsiloxane skeleton. Of these, unsaturated polyurethanes having a polycarbonate structure are especially preferred from the viewpoint of weather resistance. The term "liquid resin" as used herein means a polymer which flows and moves easily and can be solidified into a deformed shape by cooling. This term is in contrast with the term "elastomer" which, by the application of an external force, deforms instantaneously according to the external force and restores the original shape in a short period of time when the external force is removed.

When the resin (a) to be used in the present invention is a liquid resin, the resin (a) has a viscosity at 50°C of preferably 500 Pa•s or greater and not greater than 50 kPa•s, more preferably 1 kPa•s or greater and not greater than 10 kPa•s, still more preferably 1 kPa•s or greater and not greater than 5kPa•s. When the viscosity is within the above-described range, the cushion obtained using the resin can have sufficient mechanical strength. Although an apparatus used for viscosity measurement is not particularly limited, a B type viscometer is preferred because it enables convenient measurement. When the viscosity of a resin having a high viscosity is measured, the temperature is set preferably high within a range of from 40°C to 80°C.

The resin (a) to be used in the present invention preferably contains 20% or greater and not greater than 99%, based on the total hydrogen atoms of the resin (a), of hydrogen atoms showing a peak in chemical shift ranges of from 1.3 to 1.8 ppm, from 4.0 to 4.3 ppm, from 4.5 to 5.5 ppm, when $^1$H- NMR spectroscopy (magnetic resonance spectroscopy using a hydrogen atom as an nucleus to be observed) is performed using tetramethylsilane (TMS) as a reference compound.

The ratio of the hydrogen atoms is preferably 30% or greater and not greater than 99%, more preferably 40% or greater and not greater than 99%. When the ratio of the hydrogen atoms is within a range of 20% or greater and not greater

than 99%, sufficient solvent resistance against an ester solvent or sufficient solvent resistance against a hydrocarbon-solvent-containing ink to be used in offset printing can be achieved, making it possible to ensure the mechanical strength required for a cushion.

The above-described presence ratio can be calculated from an integrated value determined by the $^1$H-NMR measurement.

Examples of the functional group structure around the hydrogen atom having a peak within a chemical shift range of from 1.3 to 1.8 ppm in $^1$H-NMR include aliphatic hydrocarbon chains such as methylene group.

Examples of the functional group structure around the hydrogen atom having a peak within a chemical shift range of from 4.0 to 4.3 ppm include an ester bond, an amide bond, a urethane bond, and a urea skeleton.

Examples of the structure of a hydrogen atom having a peak within a chemical shift range of from 4.5 to 5.5 ppm include a hydrogen atom directly bonded to a double bond carbon.

The organic compound (b) in the present invention is a compound having a polymerizable unsaturated group. The compound having a polymerizable unsaturated group and having a number-average molecular weight of 100 or greater and less than 1000 is preferred. The number-average molecular weight is preferably less than 1000 because of easy dilution with the resin (a). The term "polymerizable unsaturated group" as used herein means a functional group involved in a radical or addition polymerization reaction.

Specific examples of the organic compound (b) to be used in the present invention include, as radical reactive compounds, olefins such as ethylene, propylene, styrene, and divinylbenzene; acetylenes; (meth)acrylic acid and derivatives thereof; haloolefins; unsaturated nitriles such as acrylonitrile; (meth)acrylamide and derivatives thereof; aryl compounds such as an aryl alcohol and an aryl isocyanate; unsaturated dicarboxylic acids such as maleic anhydride, maleic acid, and fumaric acid, and derivatives thereof; vinyl acetates; N-vinylpyrrolidone; and N-vinylcarbazole. From the viewpoint of availability of various types, reasonable price, and decomposition property during exposure to laser light, (meth)acrylic acid and derivatives thereof are preferred. Examples of the derivatives include alicylic compounds having a cycloalkyl group, a bicycloalkyl group, a cycloalkenyl group, or a bicycloalkenyl group; aromatic compounds having a benzyl group, a phenyl group, a phenoxy group, a naphthalene skeleton, an anthracene skeleton, a biphenyl skeleton, a phenanthrene skeleton, or a fluorene skeleton; compound having an alkyl group, a halogenated alkyl group, an alkoxyalkyl group, a hydroxyalkyl group, an aminoalkyl group, or a glycidyl group; ester compounds with a polyol such as an alkylene glycol, a polyoxyalkylene glycol, a polyalkylene glycol, or trimethylolpropane; and compounds having a polysiloxane structure such as polydimethylsiloxane and polydiethylsiloxane. The organic compound (b) may be a heterocyclic aromatic compound containing an element such as nitrogen or sulfur.

Examples of the functional group involved in an addition polymerization reaction include a cinnamoyl group, a thiol group, an azide group, an epoxy group which undergoes a ring-opening addition reaction, an oxetane group, a cyclic ester group, a dioxysilane group, a spiro-ortho-carbonate group, a spiro-ortho-ester group, a bicyclo-ortho-ester group, and a cyclic iminoether group.

Examples of the compound having an epoxy group involved in an addition polymerization reaction include compounds available by reacting a variety of polyols such as diols or triols with epichlorohydrin; and epoxy compounds available by reacting an ethylene bond in the molecule thereof with a peracid. Specific examples include epoxy compounds such as ethylene glycol diglycidyl ether, diethylene glycol diglycidyl ether, triethylene glycol diglycidyl ether, tetraethylene glycol diglycidyl ether, polyethylene glycol diglycidyl ether, propylene glycol diglycidyl ether, tripropylene glycol diglycidyl ether, polypropylene glycol diglycidyl ether, neopentyl glycol diglycidyl ether, 1,6-hexane diol diglycidyl ether, glycerin diglycidyl ether, glycerin triglycidyl ether, trimethylolpropane triglycidyl ether, bisphenol A diglycidyl ether, hydrogenated bisphenol A diglycidyl ether, diglydicyl ether of bisphenol A ethylene oxide or propylene oxide adduct, polytetramethylene glycol diglycidyl ether, poly(propylene glycol adipate)diol diglycidyl ether, poly(ethylene glycol adipate)diol diglycidyl ether, and poly(caprolactone)diol diglycidyl ether; and epoxy-modified silicone oil ("HF-105", trade name; product of Shin-etsu Chemical Co., Ltd.).

In the present invention, these organic compounds (b) having a polymerizable unsaturated group can be selected singly or in combination of two or more thereof. Use of at least one long-chain aliphatic, alicyclic or aromatic derivative as the organic compound (b) is preferred in order to suppress swelling with an organic solvent, such as alcohol, ester, or aliphatic hydrocarbon, which is a solvent of a printing ink.

The organic compound (b) has preferably at least one alicyclic or aromatic derivative in order to enhance mechanical strength of the cushion available from the photosensitive resin composition (A). In this case, the amount of the alicyclic or aromatic derivative is preferably 20 wt.% or greater, more preferably 50 wt.% or greater based on the total amount of the organic compound (b). The aromatic derivative may be an aromatic compound having an element such as nitrogen or sulfur.

In the present invention, physical properties of a cushion can be produced by photocuring the photosensitive resin composition (A). A photopolymerization initiator (c) may be added at the time of photocuring. The photopolymerization initiator (c) to be used in the present invention can be selected from ordinarily used ones, for example, photopolymerization initiators for radical polymerization, cationic polymerization or anionic polymerization which are described

in, for example, "Kobunshi Data Handbook, Kisohen", ed. by Soc. of Polymer Science, published by Baifukan (1986). It is useful to carry out crosslinking by photopolymerization in the presence of a photopolymerization initiator (c) as a process for producing a cushion with high productivity while keeping the storage stability of the resin composition of the present invention. As the photopolymerization initiator (c) inducing a radical polymerization reaction, hydrogen abstraction type photopolymerization initiators and cleavage type photopolymerization initiators are especially effective.

The hydrogen abstraction type photopolymerization initiators are not particularly limited, and an aromatic ketone is preferred. A chemical reaction mechanism has been proposed in which an aromatic ketone is efficiently put into an excited triplet state by photoexcitation, and this excited triplet state abstracts hydrogen from the surrounding medium to form radicals. The radicals thus formed are involved in the photocrosslinking reaction. As the hydrogen abstraction type photopolymerization initiator, any compound capable of abstracting hydrogen from the surrounding medium after being turned into an excited triplet state and thus forming radicals may be used. Examples of the aromatic ketone include benzophenones, Michler's ketones, xanthenes, thioxanthones, and anthraquinones. Use of at least one compound selected from the above-described group is preferred. The term "benzophenones" refers to benzophenone and derivatives thereof and specific examples include 3,3',4,4'-benzophenonetetracarboxylic anhydride, and 3,3',4,4'-tetramethoxybenzophenone. The term "Michler's ketones" refers to Michler's ketone and derivatives thereof. The term "xanthenes" refers to xanthene and derivatives thereof obtained by substitution with an alkyl group, a phenyl group, or a halogen group. The term "thioxanthones" refers to thioxanthone and derivatives thereof obtained by substitution with an alkyl group, a phenyl group, or a halogen group and specific examples include ethylthioxanthone, methylthioxanthone, and chlorothioxanthone. The term "anthraquinones" refers to anthraquinone and derivatives thereof obtained by substitution with an alkyl group, a phenyl group, or a halogen group.

The hydrogen abstraction type photopolymerization initiator is added in an amount of preferably 0.1 wt.% or greater and not greater than 10 wt.%, more preferably 0.5 wt.% or greater and not greater than 5 wt.%, each based on the total amount of the photosensitive resin composition. The amounts within the above-described range enable to ensure a sufficient curing property of the surface of the cured material and also ensure the weather resistance when a liquid photosensitive resin composition is photocured in the atmosphere.

The term "cleavage type photopolymerization initiator" refers to a compound in which a cleavage reaction occurs in the molecule thereof after light absorption to generate active radicals. In the present invention, the cleavage type photopolymerization initiator is not particularly limited. Specific examples include benzoin alkyl ethers, 2,2-dialkoxy-2-phenylacetophenones, acetophenones, acyloxime esters, azo compounds, organosulfur compounds, and diketones. Use of at least one compound selected from the above-described group is preferred. Examples of benzoin alkyl ethers include benzoin isopropyl ether and benzoin isobutyl ether, and compounds described in "Kankosei Kobunshi" (p228, published by Kodansha in 1977). Examples of the 2,2-dialkoxy-2-phenylacetophenones include 2,2-dimethoxy-2-phenylacetophenone and 2,2-diethoxy-2-phenylacetophenone. Examples of the acetophenones include acetophenone, trichloroacetophenone, 1-hydroxycyclohexylphenylacetophenone, and 2,2-diethoxyacetophenone. Examples of the acyloxime esters include 1-phenyl-1,2-propanedione-2-(o-benzoyl)oxime. Examples of azo compounds include azobisisobutyronitrile, diazonium compounds, and tetrazene compounds. Examples of the organosulfur compounds include aromatic thiol, mono- and di-sulfides, thiuram sulfide, dithiocarbamate, S-acyldithiocarbamate, thiosulfonate, sulfoxide, sulfenate, and dithiocarbonate. Examples of the diketones include benzyl and methylbenzoylformate.

The cleavage type photopolymerization initiator is added in an amount of preferably 0.1 wt.% or greater and not greater than 10 wt. %, more preferably 0.3 wt. % or greater and not greater than 3 wt. %, each based on the total weight of the photosensitive resin composition (A) of the present invention. The amounts within the above-described range enable to secure the curing property inside of the cured material sufficiently when the photosensitive resin composition is photocured in the atmosphere.

Compounds having, in one molecule thereof, both a site which functions as a hydrogen abstraction type photopolymerization initiator and a site which functions as a cleavage type photopolymerization initiator can also be used as the photopolymerization initiator (c). Specific examples of the compounds include $\alpha$-aminoacetophenones such as 2-methyl-1-(4-methylthiophenyl)-2-morpholino-propan-1-one and compounds represented by the following formula (1):

Formula (1)

[Chemical formula 1]

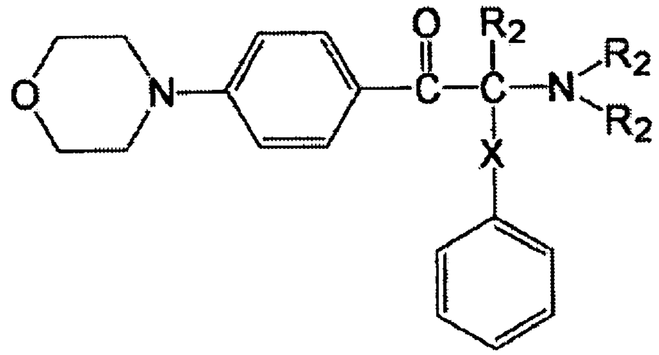

(wherein, $R_2$s each independently represents a hydrogen atom or an alkyl group having from 1 to 10 carbon atoms and X represents an alkylene group having from 1 to 10 carbon atoms).

The compound having, in one molecule thereof, both a site which functions as a hydrogen abstraction type photopolymerization initiator and a site which functions as a cleavage type photopolymerization initiator is added in an amount of preferably 0.1 wt.% or greater and not greater than 10 wt.%, more preferably 0.3 wt.% or greater and not greater than 3 wt.%, each based on the total amount of the photosensitive resin composition (A). The amounts within the above-described range enable to secure sufficient mechanical physical properties of a cured material even if the photosensitive resin composition (A) is photocured in the atmosphere.

As the photopolymerization initiator (c), compounds which generate an acid by absorbing light and induce an addition polymerization reaction can also be used. Examples of such compounds include photocationic polymerization initiators such as aromatic diazonium salt, aromatic iodonium salt and aromatic sulfonium salt, and polymerization initiators which absorbing light and thereby generating a base. The photopolymerization initiator (c) is added in an amount of 0.1 wt.% or greater and not greater than 10 wt.% based on the total amount of the photosensitive resin composition (A).

In the photosensitive resin composition (A) of the present invention, from 5 to 200 parts by weight, more preferably from 20 to 100 parts by weight of the orgnanic compound (b) is added to 100 parts by weight of the resin (a). Amounts of the organic compound (b) within the above-described range facilitate to achieve a good balance between the hardness and tensile strength and elongation of the resulting cushion, suppress shrinkage during photocuring to a low level, and ensure high thickness accuracy.

When a swelling test of the cured resin material that is obtained by curing a photosensitive resin composition which is photosensitive resin composition (A) of the present invention without organic fine particles (d) or air bubbles (e) is performed by immersing it in an isopropyl alcohol solution containing 20 vol.% of ethyl acetate at 20°C for 24 hours, the weight change is preferably -15 wt.% or greater and not greater than 15 wt.% and a film thickness change is preferably -15% or greater and not greater than 15%. The weight change is preferably within a range of -10 wt.% or greater and not greater than 10 wt.%, with a range of -8 wt.% or greater and not greater than 8 wt.% being more preferred. The film thickness change is preferably within a range of -10 wt.% or greater and not greater than 10 wt.%, with a range of -8 wt.% or greater and not greater than 8 wt.% being more preferred. The weight change and film thickness change within the above-described ranges enable to obtain a high-quality print with adequate resistance to a solvent ink to be used in flexographic printing. A reason why the swelling test is performed using a photocured material of a photosensitive resin composition, which is photosensitive resin composition (A) of the present invention without organic fine particles (d) or air bubbles (e) is because a solvent used for the test penetrate into organic fine particles (d) or the air bubbles (e), and make it difficult to measure an accurate weight change when organic fine particles (d) or the air bubbles (e) are not eliminated. The present invention has, as one important theme, improvement in solvent resistance of a cushioning material for printing so that it is of great significance to evaluate the solvent resistance of a cured material obtained by photocuring a photosensitive resin composition containing neither organic fine particles (d) nor air bubbles (e).

In the present invention, when the photosensitive resin composition (A) contains the organic fine particles (d) or the air bubbles (e), a cushioning material for printing containing the photocured material of the photosensitive resin composition (A) preferably has an ASKER-C hardness of 10 degrees or greater and not greater than 60 degrees and at the same time, the hardness immediately after starting of the measurement is smaller than the hardness after 15 seconds. The ASKER-C hardness is preferably 20 degrees or greater and not greater than 50 degrees, more preferably 25 degrees or greater and not greater than 50 degrees. Hardness 15 seconds after the measurement is started is defined as the ASKER-C hardness in the present invention. The cushioning material having an ASKER-C hardness within the above-describe range has sufficient properties as a cushion so that it reduces the impact during a printing step and can provide a good print.

When a layer available in the present invention contains the organic fine particles or air bubbles, particularly air bubbles, it has considerably deteriorated mechanical strength so that a compound having a high mechanical strength is preferably used a resin constituting a cushion.

In a tensile test of a photocured material available by photocuring a photosensitive resin composition which is photosensitive resin composition (A) without organic fine particles (d) or the air bubbles (e), tensile strength is therefore preferably $8 \times 10^6$ Pa or greater and not greater than $1 \times 10^9$ Pa, more preferably $9.8 \times 10^6$ Pa or greater and not greater than $5 \times 10^8$ Pa, still more preferably $1.1 \times 10^7$ Pa or greater and not greater than $2.5 \times 10^8$ Pa. The tensile elongation is preferably 250% or greater and not greater than 600%, more preferably 350% or greater and not greater than 500%. A material having a tensile strength and a tensile elongation within the above-described ranges is suited as a material constituting a cushion having flexibility while having sufficient mechanical strength.

The photosensitive resin composition (A) to be used in the present invention may contain a polymerization inhibitor, a ultraviolet absorber, a dye, a pigment, a lubricant, a surfactant, a plasticizer, and a perfume, depending on the application or using purpose.

In the present invention, although the thickness of a cushion for printing or a cushioning layer for printing is not particularly limited, it is preferably 0.1 mm or greater and not greater than 10 mm, more preferably 0.3 mm or greater and not greater than 5 mm.

A stress of the cushion for printing or cushioning layer for printing at a compressive strain of 100 $\mu$m is preferably $5 \times 10^3$ Pa or greater and not greater than $8 \times 104$ Pa, more preferably $1 \times 10^4$ Pa or greater and not greater than $8 \times 10^4$ Pa, still more preferably $2 \times 10^4$ Pa or greater and not greater than $7 \times 10^4$ Pa. When the stress is within the above-described range, it can function sufficiently as a cushion and can reduce the impact during a printing step.

No particular limitation is imposed on the density of the cushioning material for printing, and it is preferably 0.2 g/cm$^3$ or greater and not greater than 0.9 g/cm$^3$, more preferably 0.2 g/cm$^3$ or greater and not greater than 0.8 g/cm$^3$, still more preferably 0.2 g/cm$^3$ or greater and not greater than 0.7 g/cm$^3$. The cushioning material having the density within the above-described range can sufficiently absorb the impact during printing as a cushion.

A cushion for printing can be obtained by placing, on a substrate, a layer composed of the cushioning material for printing according to the present invention. The substrate has preferably a sheet-like or cylindrical shape.

One of the roles of the sheet-like or cylindrical substrate is to secure dimensional stability of a cushion so that a substrate having a high dimensional stability is preferably selected. The substrate therefore has a linear expansion coefficient not greater than 100 ppm/°C, more preferably not greater than 70 ppm/°C.

Methods for reducing the linear expansion coefficient of the substrate may include a method of adding a filler and a method of impregnating or coating a mesh cloth made of an aromatic polyamide or a glass cloth with a resin. As the filler, ordinarily employed organic fine particles, inorganic fine particles such as metal oxides or metals, organic/inorganic composite fine particles and the like are usable. Porous fine particles, fine particles having a hollow therein, microcapsule particles, and layered compound particles with a low-molecular compound intercalated therein may also be used. Particularly, metal oxide fine particles such as alumina, silica, titanium oxide, and zeolite, latex fine particles composed of a polystyrene/butadiene copolymer, and natural organic fine particles such as highly crystalline celluloses are useful.

Specific examples of materials for the substrate include polyester resins, polyimide resins, polyamide resins, polyamide imide resins, polyether imide resins, polybismaleimide resins, polysulfone resins, polycarbonate resins, polyphenylene ether resins, polyphenylene thioether resins, polyether sulfone resins, liquid crystal resins composed of an aromatic polyester resin, aromatic polyamide resins, and epoxy resins. These resins layered one after another may also be used. A porous sheet, for example a cloth formed by knitting fibers, a nonwoven fabric, or a film provided with pores may be used as the sheet-like substrate. If a porous sheet is used as the sheet-like substrate, high adhesion for uniting the cushioning layer and the sheet-like substrate can be achieved by photocuring after having impregnated pores with the photosensitive resin composition (A). Examples of fibers forming the cloth or the nonwoven fabric include inorganic fibers such as glass fibers, alumina fibers, carbon fibers, alumina/silica fibers, boron fibers, silicon rich fibers, potassium titanate fibers, and sapphire fibers; natural fibers such as cotton and hemp; semisynthetic fibers such as rayon and acetate; and synthetic fibers such as nylon, polyester, acryl, vinylon, polyvinyl chloride, polyolefin, polyurethane, polyimide, and aramid. Celluloses produced by bacteria are highly crystalline nanofibers and are suitable materials for the fabrication of a nonwoven fabric which is thin and has high dimensional stability.

As the cylindrical substrate, that made of a fiber reinforced plastic (FRP), a plastic or a metal may be used. For weight reduction, the cylindrical substrate may be a hollow one with a certain thickness. In the present invention, the cylindrical substrate may be either a rigid one or a flexible one.

In the present invention, a layer made of the cushioning material for printing is formed on a substrate, for example, by molding or forming a layer of the photosensitive resin composition (A) on a substrate and then curing it by exposure to light. The photosensitive resin composition (A) can be molded or formed by the conventional resin molding or forming method. Examples of the method include a cast molding method, and a method of extruding a resin from a nozzle or die by using a machine such as a pump or an extruder, and then adjusting the thickness with a blade or

calendering with a roll. In this case, molding or forming can also be conducted while heating the resin without deteriorating the performance of the resin. The resin may also be subjected to rolling, grinding, and the like if necessary.
In order to mold or form the cushioning material into a cylinder, the layer may be molded or formed on an organic film such as PET (polyethylene terephthalate), PEN (polyethylene naphthalate), polyimide, polyamide, polysulfone, polyether ether ketone, polyphenylene ether, or polyphenylene thioether or a sheet-like substrate made of a metal such as nickel, chromium, iron, copper, titanium, or aluminum and then, it may be adhered onto a cylindrical cylinder or the layer may be molded or formed directly on a cylinder of a printing machine.

In the present invention, a peel adhesion strength between the layer made of the cushioning material for printing, that is, the cushioning layer and the substrate is preferably 0.03 kg/cm or greater and not greater than 7 kg/cm, more preferably 0.2 kg/cm or greater and not greater than 3 kg/cm, more preferably 0.3 kg/cm or greater and not greater than 3 kg/cm. When the peel adhesion strength is 0.03 kg/cm or greater, the cushioning layer does not peel from the substrate in high-speed printing and therefore, the pattern position on the printing plate does not move. When the peel adhesion strength is not greater than 7 kg, the cushioning layer may be separated from the substrate and the substrate may be reused.
The term "peel adhesion strength" as used herein is, in accordance with JIS K6854, a strength necessary for peeling the substrate from the cushioning layer in a direction 180° or 90° relative to the adhesion surface.
When a sample provided for measurement of a peel adhesion strength between the substrate and cushioning layer is in the form of a sheet or plate, the substrate is separated from the cushioning layer in a direction of 180°, while the sample is in the cylindrical form, the substrate is separated from the cushioning layer in a direction of 90°, each relative to the adhesion surface. An apparatus to be used for evaluating the peel adhesion strength is preferably a commercially available tensile tester. When the cushioning material stretches at the time of measurement, it is difficult to correctly measure its peel adhesion strength so that a reinforcing material may be attached onto the surface of the cushioning layer.

When the cushioning layer is formed by molding or forming a layer of the photosensitive resin composition (A) on the substrate and then curing it by exposure to light, the adhesion force between the cushion layer and the substrate is enhanced by adjusting a cure shrinkage, in the case where the photosensitive resin composition (A) is photocured by exposure to light of 350 nm with integrated light quantity of 4000 $mJ/cm^2$, to preferably 2% or greater and not greater than 20%. The cure shrinkage is more preferably 4% or greater and not greater than 15%, still more preferably 5% or greater and not greater 10%. Cure shrinkages of the photosensitive resin composition (A) within the above-describe range enable to secure an adhesive force between the cushioning layer and the substrate even if a hollow cylindrical sleeve is used as the substrate, because photocuring does not cause a large change in the size of the layer of the photosensitive resin composition (A).

The term "cure shrinkage" as used herein means a value obtained from the specific gravities before and after curing of the photosensitive resin composition in accordance with the following equation:

$$\text{Cure shrinkage (\%)} = \{(\text{specific gravity after curing}) - (\text{specific gravity before curing})/(\text{specific gravity before curing}) \times 100$$

In the equation, the term "specific gravity before curing" means a specific gravity of a photosensitive resin composition before photocuring as measured using a gravimeter such as specific gravity bottle assuming that the specific gravity of water is 1. The term "specific gravity after curing" means a specific gravity of a material obtained by photocuring a sheet of the photosensitive resin composition.

In the present invention, the adhesion between the sheet and the layer of the photosensitive resin composition can be improved by subjecting the surface of the sheet-like or cylindrical substrate to physical or chemical treatment. Physical treatment methods may include a sand blast method, a wet blast method of jetting a fine-particle-containing liquid, a corona discharge treatment method, a plasma treatment method, and ultraviolet ray or vacuum ultraviolet ray irradiation method. Chemical treatment methods include a strong acid/strong alkali treatment method, an oxidant treatment method and a coupling treatment method.

The cushion for printing obtained by forming a layer made of such a cushioning material for printing on the substrate is preferably arranged in the order that the substrate is located on the side of the cylinder of a printing machine, in other words, the members are arranged in the following order: the cylinder/substrate/cushioning layer for printing/printing plate.

The cushioning layer or cushion for printing made of the cushioning material for printing according to the present invention may be layered. For example, two or more cushions for printing each made of the cushioning material for printing according to the present invention may be layered one after another, or the cushion for printing may be used in combination with a commercially available polyethylene foam or polyurethane foam manufactured in a known manner.

No particular limitation is imposed on the material of the foamed material obtained in a known manner. When cushions for printing are layered, the layering order is not particularly limited.

The total thickness of the layered cushions for printing or the cushioning layers is preferably 0.1 mm or greater and not greater than 10 mm, more preferably 0.3 mm or greater and not greater than 5 mm. When the total thickness is within the above-described range, the resulting layered product can sufficiently absorb the shock at the time of printing.

A printing plate can be obtained by layering a printing plate layer on the cushioning layer for printing made of the cushioning material for printing according to the present invention.

A printing original plate can also be obtained by layering a printing original-plate layer on the cushioning layer for printing made of the cushioning material for printing according to the present invention. A printing plate can be obtained by forming a concave-convex pattern on the surface of the printing original-plate. The pattern forming method is not particularly limited. Examples of it include a photoengraving technique of using a layer of a photosensitive resin composition (B) as a printing original-plate layer, exposing it to light and then developing; a CTP (Computer-to-plate) technique of using a layer of a photosensitive resin composition (C) as a printing original-plate layer, plotting patterns on it with a laser pattern generator, exposing it to light, and then developing; a method of using a layer of a photosensitive resin composition (E) as a printing original-plate layer, exposing it with a laser pattern generator or a photoengraving technique, and forming patterns using a thermal development plate-making technique; and a laser engraving method of using a layer of a cured resin as a printing original-plate layer, exposing it to a laser light to directly remove the resin. The laser engraving method is a very convenient method because it does not require a development step for removing an uncured resin.

The photosensitive resin composition (A) constituting the cushioning material for printing is preferably different in composition from that of the photosensitive resin compositions (B) to (E) constituting a printing original-plate layer or a printing plate layer. The term "different in composition" includes a composition does not contain air bubbles or organic fine particles. Accordingly, in the present invention, a difference whether or not a composition contains air bubbles or organic fine particles is included in the concept "different in composition".

The printing plate layer or the printing original-plate layer is layered over the cushioning layer for printing, for example, by directly applying a resin for forming a printing plate or a printing original-plate layer over the cushion for printing or by attaching a sheet-like printing plate or printing original-plate via an adhesive layer.

In the case of a laser engravable printing original-plate, examples of a material of the printing original-plate layer include crosslinked natural rubber, crosslinked synthetic rubber, cured material of a thermosetting resin, and a cured material of a photosensitive resin. Of these, a cured material of a photosensitive resin is preferred. In such a printing original-plate layer made of a cured material, formation of a cured material layer of a photosensitive resin by layering a photosensitive resin for printing original-plate over the cushion for printing and then exposing the whole surface to light for curing is especially preferred from the viewpoint of ensuring a print quality or a molding or forming property.

The thickness of the printing plate layer or printing original-plate layer to be formed over the cushioning layer for printing may be set as desired depending on its using purpose, but it is preferably from 0.1 to 7 mm. In some cases, a plurality of layers made of materials different in composition may be layered over one after another. In the case of a laser engravable printing original-plate, for example, it is possible to form, on the outermost surface thereof, a layer which can be engraved by a laser having an oscillation wavelength in a near infrared region such as a YAG laser, a fiber laser, or a semiconductor laser and then forming therebelow another layer which can be engraved by a laser such as an infrared laser, e.g., a carbon dioxide gas laser or a visible/ultraviolet laser. Formation of such a layered structure enables deep engraving of a relatively rough pattern by using a carbon dioxide gas laser of an extremely high output and engraving of a very fine pattern in the vicinity of the surface by using a near infrared laser such as a YAG laser or a fiber laser. Since the very fine pattern requires only relatively shallow engraving, thickness of the layer sensitive to a near infrared laser is preferably 0.01 mm or greater and not greater than 0.5 mm. By layering a layer sensitive to a near infrared laser on a layer sensitive to an infrared laser, the depth of the pattern engraved by the near infrared laser can be controlled correctly. This is attributable to the phenomenon that a layer sensitive to an infrared laser cannot be engraved easily by a near infrared laser. A difference in the fineness of patterns which can be engraved owes to a difference in the oscillation wavelength specific to a laser apparatus, in short, a difference in the laser beam diameter which can be narrowed. When laser engraving is performed by such a method, engraving may be performed using two laser engraving apparatuses having an infrared laser and a near infrared laser, respectively, or engraving may be performed using a laser engraving apparatus having both an infrared laser and a near infrared laser.

In laser engraving, a desired image is converted into digital data, and a relief image is formed on an original plate by a laser apparatus controlled by making use of a computer having the above-mentioned digital data. The laser used for laser engraving may be any type of laser insofar as the laser contains a wavelength which can be absorbed by the original plate. For performing high-speed engraving, a laser of a high output is desired and an infrared or infrared solid-state laser such as a carbon dioxide laser, a YAG laser, or a semiconductor laser is preferred. Further, second harmonics of a YAG laser having an oscillation wavelength in a visible light region, a copper vapor laser, a ultraviolet laser such as excimer laser having an oscillation wavelength in a ultraviolet region, or a YAG laser with second and third

harmonics conversion is suited for forming fine patterns because they can give abrasion processing for breaking the linkage of an organic molecule. The laser irradiation may be either a continuous irradiation or a pulse irradiation. In general, a resin has an absorption in the vicinity of the wavelength of 10 μm of a carbon dioxide laser so that addition of a component for facilitating the absorption of a laser light is not essential. A YAG laser has however a wavelength in the vicinity of 1.06 μm and most organic compounds do not have an absorption near this wavelength. In this case, therefore, addition of a component, such as a dye or a pigment, for facilitating the absorption of this laser light is preferred. Examples of such a dye include poly(substituted) phthalocyanine compounds, metal-containing phthalocyanine compounds, cyanine compounds, squarylium dyes, chalcogenopyryloarylidene dyes, chloronium dyes, metal thiolate dyes, bis(chalcogenopyrrylo)polymethine dyes, oxyindolizine dyes, bis(aminoaryl)polymethine dyes, merocyanine dyes, and quinoid dyes. Examples of the pigment include dark colored inorganic pigments such as carbon black, graphite, copper chromite, chromium oxide, cobalt chrome aluminate, copper oxide, and iron oxide, and metal powders such as iron, aluminum, copper, and zinc and these metals doped with SI, Mg, P, Co, Ni, Y or the like. These dyes or pigments may be used either singly or in combination. They may be used in any combination, for example, as a multilayer structure. However, when a photosensitive resin composition is cured using a light, it is preferred to suppress an amount of an organic/inorganic compound which has a high light absorption at the wavelength of light used for curing so as not to hinder the photocuring property. The amount of it is preferably 5 wt.% or less, more preferably 2 wt.% or less based on the total weight of the photosensitive resin composition.

The laser engraving is performed under the atmosphere of an oxygen-containing gas, generally in the presence of air or under the air stream, but it can also be performed in the atmosphere of a carbon dioxide gas or a nitrogen gas. After completion of the engraving, powdery or liquid residue generated in a small amount on the surface of the resulting relief printing plate may be removed by an appropriate method, for example, washing with water containing a solvent or surfactant, high pressure spraying of an aqueous detergent, or spraying of a high pressure steam.

After formation of concave-convex patterns by laser engraving, the surface of a printing plate having patterns formed thereon may be subjected to post exposure by irradiating light with a wavelength of from 200 nm to 450 nm. The post-exposure is a method effective for removal of tacks from the surface. The post-exposure may be performed in any environment such as in the air, in an inert gas atmosphere, or in water. The post-exposure is especially effective when a hydrogen abstraction type photopolymerization initiator is contained in the photosensitive resin composition. Further, prior to the post-exposure, the surface of the printing plate may be treated with a treatment liquid containing a hydrogen abstraction type photopolymerization initiator. The printing plate may be exposed to light while being immersed in the treatment liquid containing a hydrogen abstraction type photopolymerization initiator.

The cushion for printing manufactured using the cushioning material for printing according to the present invention or the printing plate having the cushioning layer for printing according to the present invention can be attached to a cylinder of a printing machine. Although the kind of the printing machine is not limited, they are particularly effective and preferred when used in a flexographic printing machine, among printing machines employing various printing processes. There are various flexographic printing machines such as common impression cylinder (CI) type, stack type and in-line type, and for corrugated boards. No particular limitation is imposed on the kind of the printing machine insofar as it is a flexographic printing machine having a mechanism permitting attachment of a cushion for printing to its cylinder. It is to be noted that the above-described printing machines each transfers an ink to a printing medium.

When high-speed printing is conducted in order to efficiently obtain a print, use of a cushion for printing or printing plate in which a cushioning layer for printing is formed over a cylindrical substrate is preferred. The term "high-speed printing" as used herein means printing at a speed of about 100 m/min or greater and not greater than 1000 m/min, preferably 100 m/min or greater and not greater than 800 m/min, more preferably 100 m/min or greater and not greater than 600 m/min. The printing speed within the above-described range provides a stable print quality when a cylindrical substrate is used.

When a cushion for printing manufactured from the cushioning material for printing according to the present invention is attached to the cylinder of a printing machine, the surface temperature of the printing plate at the time of printing is preferably 40°C or greater and not greater than 150°C. At the temperatures within this range, the cushion can be used without causing such a problem as deterioration in the quality of a print due to thermal deformation of the cushion. A service temperature limit of the printing machine is typically determined by a printing medium. Heat resistance temperature of films is typically lower than that of paper or corrugated boards. With an increase in the temperature of a printing machine, a film on the printing machine onto which a tension is applied stretches. As a film is stretched, its strength becomes insufficient or misregistration between colors in multicolor printing occurs. In order to avoid such problems, the surface temperature of the printing plate is preferably 40°C or greater and not greater than 100°C, more preferably 40°C or greater and not greater than 80°C. The surface temperature of a printing plate is preferably measured after stopping the operation of a printing machine. The term "surface temperature" as used herein means a temperature of the outermost surface of a printing plate which contacts with an anilox roll of a printing machine or a printing medium directly.

A printing machine to be used in combination with a cushion for printing manufactured from the cushioning

material for printing according to the present invention or a printing plate having a cushioning layer for printing manufactured from the cushioning material for printing according to the present invention has preferably a heat source or a light source for fixing an ink to a printing medium. The ink can be fixed to the recording medium by blowing hot air to evaporate the solvent in the ink, thereby drying; by irradiating UV light to cure a UV curable ink, thereby drying; or by irradiating an electron beam to cure an ink, thereby drying. Of these, drying by blowing hot air and drying by irradiating a UV light are very efficient and convenient method.

The cushioning material for printing according to the present invention can be used for manufacturing a cushioning layer for various printing plates, for example, printing plates having a relief image such a relief image for mold materials of ceramic products, a relief image for displays such as advertisement or sign board, and a relief image for patterning of insulator/resistor/conductor paste to be used for production of electronic parts; printing plates used for pattern formation of functional materials such as an antireflective film/color filter/(near) infrared absorbing filter of optical parts; printing plates used for pattern formation of a coating such as orientation film/underlying layer/light emission layer/electron transport layer/sealant layer in the fabrication of a display device such as liquid crystal display or organic electroluminescence display; screen printing plates; and rotary screen printing plates; or manufacturing a cushion for printing to be used in combination with these printing plates.

The cushioning material for cushion for printing according to the present invention can also be used for various applications such as stamp/seal, design roll for emboss processing, a mold for various molded or formed materials, blanket for printing, and ink-amount regulator roll used in contact with an anilox roll.

Examples

The present invention will hereinafter be described in further detail by Examples and Comparative Examples. They are however exemplary only and the present invention is not limited by the following Examples and the like. Those skilled in the art can perform the present invention after giving various modifications to the following Examples. Such modifications are all included in the scope of the claims of the present invention.

[Examples I-1 to I-9 and Comparative Examples I-1 to I-9]

Measurement methods and evaluation methods employed in Examples I-1 to I-9 and Comparative Examples I-1 to I-9 will next be described (I-1) Measurement of viscosity

The viscosity of a photosensitive resin composition was measured at 20°C by using a B type viscometer ("B8H model", trademark, product of Tokyo Keiki Kogyo Co., Ltd./Japan). The viscosity of a resin was measured at 50°C. (I-2) Measurement of number-average molecular weight of resin (a)

Since the polydispersity index (Mw/Mn) as determined by GPC exceeded 1.1, the number-average molecular weight Mn as determined by GPC was used as the average molecular weight of Resin (a). Specifically, the number-average molecular weight of the resin (a) was the value converted by gel permeation chromatography (GPC) using polystyrene having a known molecular weight. The number-average molecular weight was measured using a high performance GPC apparatus ("HLC-8020"; trademark, product of Tosoh Corporation/Japan) and a polystyrene packed column ("TSKgel GMHXL", trademark; product of Tosoh Corporation/Japan) while using tetrahydrofuran (THF) as a developing solvent. The column temperature was set at 40°C. A THF solution having a resin concentration of 1 wt.% was used as a sample and 10 μl of the sample was charged in the GPC apparatus. A resin UV absorption detector was used as a detector and a light having a wavelength of 254 nm was used as a monitoring light.

(I-3) Measurement of the number of polymerizable unsaturated groups

The average number of polymerizable unsaturated groups present in the molecule of the resin (a) was determined by analyzing its molecular structure with nuclear magnetic resonance spectroscopy (NMR spectroscopy) after removal of unreacted low molecular components by liquid chromatography. (I-4) Measurement of true specific gravity of capsular fine particles

A 100-ml measuring flask was weighed and the weight was designated as WS1 (g). After about 2 g of capsular fine particles was weighed and charged in the measuring flask, the total weight was weighed and the weight was designated as WS2 (g). The resulting measuring flask was charged with 50 ml of isopropyl alcohol (IPA), followed by shaking to completely remove the air attached to the capsular fine particles. IPA was added to the gauge line of the measuring flask and the total weight was measured. The weight was designated as WS3 (g). Separately, the weight of another measuring flask which was empty was weighed and the weight was designated as WB1 (g). IPA was added to the gauge line of the measuring flask and the total weight was measured. The weight was designated as WB2 (g).

After finding all the above-described values, the true specific gravity of the capsular fine particles was determined in accordance with the following equation:

[Equation 1]

$$\text{True specific gravity} = \frac{(WS2 - WS1) \times (WB2 - WB1) \div 100}{(WB2 - WB1) - (WB3 - WB2)}$$

(I-5) Measurement of storage elastic modulus (E'), loss elastic modulus (E"), and tanδ
(For cushioning material for printing manufactured using photosensitive resin composition (A))
The storage elastic modulus (E'), loss elastic modulus (E"), and tanδ of a cushioning material for printing manufactured using the photosensitive resin composition (A) were measured in the following manner by using a dynamic viscoelasticity measuring instrument "RSA-II" (trade name; product of Rheometric Scientific F.E. Ltd.).
A transparent 100-μm thick polyester film having a surface treated with silicon was adhered onto a cylindrical substrate having an outer diameter of 152.905 mm and width of 450 mm and made of fiber reinforced plastic. The photosensitive resin composition (A) was then applied onto the polyester film by using a doctor blade, followed by exposure to the ultraviolet light of a metal halide lamp ("M056-L21", trademark, product of EYE GRAPHICS Co., Ltd.) at 4000 mJ/$cm^2$ (integrated energy amount by using a UV meter and UV-35-APR filter) for curing, whereby a cushioning material for printing for measurement was obtained. The thickness after curing was adjusted to 0.5 mm by the doctor blade.
The resulting cushioning material for measurement was cut into a size of 10 mm wide and 35 mm long and the sample was set in a tension type geometry of the dynamic viscoelasticity measuring instrument "RSA-II". Measurement was performed at every 10°C from 30°C to -60°C and at sinusoidal frequency of from 0.01 Hz to 15.915 Hz as under conditions of an effective measurement length of 22.6 mm and a strain amplitude of 0.1 %. In accordance with the application of the instrument, a master curve was constructed with 20°C as its reference temperature based on the time-temperature conversion principle. From the master curve thus obtained, tanδ at 1000 Hz was read.
(For cushioning material for printing manufactured from a thermosetting resin composition)
In the same manner that employed for the preparation of the cushioning material for printing from the photosensitive resin composition (A) except that a thermosetting resin composition was applied onto the polyester film with the doctor blade, followed by thermal curing, a cushioning material for printing for measurement was obtained and it was measured in the same way.

(For commercially available cushion for printing)

In a commercially available cushion tape, the substrate of a film is generally integrated with a cushioning layer, therefore it is difficult to measure the storage elastic modulus and loss elastic modulus of the cushioning material itself by the measurement using a tension type geometry. The tape was therefore set in a compression type geometry. In the same way as that employed for the preparation of the cushioning material for printing from the photosensitive resin composition (A) except that the effective measurement length and the strain were changed to 20 mm × 20 mm and 0.5%, measurement was performed.
For conformation, measurement of the cushioning material for printing manufactured from the photosensitive resin composition (A) was performed using a tension type and a compression type, but there was no difference between the measurement values.
(I-6) Impact resilience as measured by a falling ball measurement method at 23°C
Four sheet-like cushioning materials for printing which were each a 50 mm × 50 mm square and 0.5 mm thick were layered one after another and used as a measurement sample. For comparison, four commercially-available cushion tapes which were each a 50 mm × 50 mm square were also layered one after another and used as another measurement sample. At the time of layering, they were layered deliberately so as not to enter air between them and the sample was fixed at a position which was presumed to be a center at which an iron ball fell. Only the bottom surface of the sample was fixed with a double-sided tape ("ST-416", trademark, product of 3M Company). In the measurement using the falling ball method, an iron ball having a diameter of 8 mm was allowed to drop by gravity onto the sample from the height of 300 mm above the printing surface and a bounding height S mm of the iron ball was measured.

(I-7) Laser engraving

Laser engraving was carried out using a carbon dioxide gas laser engraving machine ("ZED-mini-1 000", trademark; product of ZED Instruments/England, equipped with a 250W-output carbon dioxide gas laser, product of

Coherent Inc./United States). An engraving image was ruled at 120 Lines per inch. Halftone Patterns having a halftone dot percentage of 1 %, 2%, 3%, 4%, 5%, 6%, 7%, 8%, 9%, 10%, 12%, 15%, 18%, 20%, 25%, 30%, 40%, 50%, 60%, 70%, 80%, 90%, 95%, and 100% were formed. Separately, a gradation pattern having a density of from 1 % to 99% was formed. Patterns of thin lines having a line width of 60 μm, 100 μm, 150 μm, 200 μm, 250 μm, and 500 μm were formed. Patterns of reverse lines having a line width of 60 μm, 100 μm, 150 μm, 200 μm, 250 μm and 500 μm were formed. Characters having a font size of 2 point, 3 point, 4 point, 6 point and 8 point were formed in both Mincho and Gothic type style were printed. Rreverse fine characters having a font size of 2 point, 3 point, 4 point, 6 point and 8 point were formed in both Mincho and Gothic type style. In order to detect density unevenness, dot patterns with a size of 50 mm × 50 mm having a halftone dot percentage of 20% and 30% were formed.
The engraving depth is set at 0.5 mm because when an engraving depth is unduly large, enough area of a relief surface of a portion of a pattern having a fine halftone dot cannot be secured, thus the shape of the relief is broken and the image becomes unclear.

(I-8) Evaluation test on printability

A print is highly evaluated when ink coverage in solid areas is high, an ink film exists visually uniformly, reverse lines in solids are optimally reproduced, thin lines are reproduced correctly without widening, and dots approximate to the original data.
As an evaluation test of printability, printing was therefore conducted under the following conditions (printing medium, printing speed, and printing machine) by using a flexographic plate for laser engraving having a printing layer made of a photosensitive resin composition D which will be described later. Ink coverage in solid areas, that is, a portion with a density of 100% of a test pattern, reproduction of reverse lines in solids, and widening of thin lines and halftone dot reproduction were evaluated visually.
The ink coverage in solid areas was measured using an image analyzer ("LUZEX", trademark, product of NIRECO CORPORATION) and evaluated in the following evaluation criteria:

A: Ink coverage in solid areas is 97% or greater.
B: Ink coverage in solid areas is 95% or greater and less than 97%.
C: Ink coverage in solid areas is 90% or greater and less than 95%.
D: Ink coverage in solid areas is less than 90%.

With regard to the optimal reproduction of reverse lines in solids, the reverse lines of a print were evaluated by five experts in accordance with the following criteria and the print having an average score of 3.5 was rated A, that having an average score of 2.5 or greater and less than 3.5 was rated B, that having an average score of 1.5 or greater and less than 2.5 was rated C, and that having an average score less than 1.5 was rated D.
Score 4: Reverse lines are completely blank in solids.
Score 3: Reverse lines are almost completely blank in solids.
Score 2: Reverse lines are filled with an ink slightly.
Score 1: Reverse lines are filled completely with an ink.
With regard to halftone dot reproduction, a continuity of change of dot percentage of a print in which dots were printed while changing the dot percentage continuously was evaluated by five experts in accordance with the following criteria and the print having an average score of 3.5 or greater was rated A, that having an average score of 2.5 or greater and less than 3.5 was rated B, that having an average score of 1.5 or greater and less than 2.5 was rated C, and that having an average score less than 1.5 was rated D.
Score 4: Continuous change is smooth.
Score 3: Continuous change is almost smooth.
Score 2: An intermittent change is observed slightly.
Score 1: An intermittent change is observed clearly.

(Preparation of the photosensitive resin composition (D) for preparation of printing layer)

A 1-L separable flask equipped with a thermometer, a stirrer, and a reflux apparatus was charged with 455.53 g of polycarbonate diol "PCDL L4672" (trademark; product of Asahi Kasei Corporation, number-average molecular weight: 1945, OH value: 57.7) and 28.76 g of tolylene diisocyanate. Under heating at 80°C, the resulting mixture was reacted for about 3 hours and then, 18.25 g of 2-methacryloyloxy isocyanate was added. The resulting mixture was reacted further for about 3 hours to prepare a resin having, at an end thereof, a methacrylic group (about 1.7 polymerizable unsaturated groups per molecule) and having a number-average molecular weight of about 7000.
The resulting resin was like sugar syrup at 20°C. It flowed by the application of an external force and did not restore the

original shape even after removal of the external force.
To 67 parts by weight of the resin were added 23 parts by weight of phenoxy acrylate and 8 parts by weight of diethylene glycol monobutyl ether monomethacrylate as polymerizable monomers. Then, 5.1 parts by weight of porous fine-powder silica "Sylosphere C-1504" (trademark; product of Fuji Silysia Chemical Ltd., number-average particle diameter: 4.5 μm, specific surface area: 520 $m^2/g$, average pore size: 12 nm, pore volume: 1.5 ml/g, loss on ignition: 2.5 wt.%, oil absorption amount: 290 ml/100g). It was found as a result of observation of the true sphericity of porous spherical silica "Sylosphere C-1504" under a scanning electron microscope that almost all the particles had a true sphericity of 0.9 or greater.
As photopolymerization initiators, 0.5 part of benzophenone which was a hydrogen abstraction type photopolymerization initiator and 0.6 part by weight of 2,2-dimethoxy-2-phenylacetophenone (DMPAP) which was a cleavage type photopolymerization initiator were added.
Furthermore, 1.0 part by weight of 2,6-di-t-butyl-4-methylphenol and 1 part by weight of a methylstyryl-modified silicone oil ("KF-41 0", trademark, product of Shin-etsu Chemical Co., Ltd.) were added as additives to prepare the photosensitive resin composition (D), in liquid form at 20°C, for preparing a printing layer.
The photosensitive resin composition (D) was liquid at 20°C. It had a viscosity, as measured using a B type viscometer, of 5 kPa•s or less at 20°C.

Printability Evaluation Test 1

Printing was performed at a printing speed of 100 m/min by using a biaxially-stretched polypropylene film as a printing medium, an ester solvent ink, and a flexographic printing machine (product of IYO KIKAI SEISAKUSHO Co., Ltd./Japan).

Printability Evaluation Test 2

Printing was performed at a printing speed of 100 m/min by using a polyethylene film as a printing medium, an ester solvent ink, and a flexographic printing machine ("SOLOFLEX", trademark, product of WINDMOLLER & HOELSCHER Corporation/Germany).

Printability Evaluation Test 3

Printing was performed at a printing speed of 120 m/min by using a polyethylene film as a printing medium, an alcohol ink, and a flexographic printing machine a LEMO "Meisterflex" printing machine (product of LEMO Maschinenbau GmbH, D-53859 Niederkassel-Mondorf/Germany).

Printability Evaluation Test 4

Printing was performed at a printing speed of 200 m/min by using a polyethylene film as a printing medium, an ester solvent ink, and a flexographic printing machine ("FLEXPRESS 16S", trademark, product of Fischer & Krecke GmbH/Germany).

Printability Evaluation Test 5

As a printability evaluation test at a higher speed, printing was performed at a printing speed of 600 m/min by using a biaxially-stretched polypropylene film as a printing medium, an alcohol solvent ink, and a flexographic printing machine (product of UTECO Converting/Italy).

(I-9) Evaluation test on peel adhesion strength between substrate and cushioning layer

The peel adhesion strength between a substrate and a cushioning material was measured in accordance with JIS K6854.
When a sample provided for the test was in the form of a sheet or plate, measurement was made by separating the substrate from the cushioning layer in a direction of 180°, while the sample was in the form of a cylinder, measurement was made by separating the substrate from the cushioning layer in a direction of 90°. The sample was provided for the measurement after lightly applying an adhesive on the surface of the cushioning layer and reinforcing it with a polyester film (PET film). The width of the sample was set at 30 mm and a peeling rate was set at 50 mm/min. For the measurement, a tensile tester ("AGS-J", trademark, product of Shimadzu Corporation) was used.

(Example I-1)

(Preparation of Resin (a1))

For use as the resin (a), a resin (a1) having, at the end thereof, a methacrylic group (about 1.7 polymerizable unsaturated groups per molecule) and having a number-average molecular weight of about 8000 was prepared by adding, to a 2-L separable flask equipped with a thermometer, a stirrer, and a reflux apparatus, 875 g of polycarbonate diol "PCDL T4672" (trademark; product of Asahi Kasei Corporation, number-average molecular weight: 2063, OH value: 54.4) and 53.7 g of tolylene diisocyanate, reacting the resulting mixture for about 3 hours under heating at 80°C, adding 36.9 g of 2-methacryloyloxy isocyanate, and then, reacting the resulting mixture further for about 3 hours. The resulting resin was like sugar syrup at 20°C. It flowed by the application of an external force and did not restore the original shape even after removal of the external force.
In the $^1$H-NMR spectroscopy (nuclear magnetic resonance spectroscopy using a hydrogen atom as a nucleus to be observed) with tetramethylsilane (TMS) as a reference compound, the percentage of hydrogen atoms having a peak within chemical shift ranges of from 1.4 to 1.7 ppm, from 4.0 to 4.3 ppm, from 4.5 to 5.5 ppm was 40% relative to all the hydrogen atoms of the resin (a1).

(Preparation of photosensitive resin composition (A1) for manufacturing cushion for printing)

To 50 parts by weight of the resin (a1) were added 25 parts by weight of phenoxyethyl methacrylate and 25 parts by weight of phenoxyethyl acrylate as the organic compound (b).
As the photopolymerization initiator (c), 0.5 part by weight of 2,2-dimethoxy-2-phenylacetophenone (DMPAP) which was a cleavage type photopolymerization initiator was added.
Furthermore, 0.6 part by weight of 2,6-di-t-butyl-4-methylphenol and 1 part by weight of bis(1,2,2,6,6-pentamethyl-4-piperidyl)sebacate were added as additives to prepare a resin composition (A1') which was in the liquid at 20°C.
The resin composition (A1') was liquid at 20°C. It had a viscosity, as measured using a B type viscometer, of 80 Pa·s or less at 20°C.
A resin composition (A1) for manufacturing a cushion for printing was obtained by mixing 100 parts by weight of the resin composition (A1') with 16 g of capsular fine particles ("MFL100CA", trademark, product of Matsumoto Yushi-Seiyaku Co., Ltd.) having an average particle diameter of about 100 μm, which had been ballooned in advance, in a planetary kneader. The capsular fine particles had calcium carbonate fine particles attached to the surface thereof and had a true specific gravity of 0.134 g/cm$^3$.
The photosensitive resin composition (A1) was in liquid form at 20°C. It had a viscosity, as measured using a B type viscometer, of 4000 Pa·s or less at 20°C.

(Manufacturing of printing plate)

A cushioning layer for printing made of a cylindrical cured material of a resin was obtained by applying a UV-curable adhesive onto a hollow cylindrical substrate which was attached to an air cylinder, had a thickness of 1.2 mm, and was made of fiber reinforced plastic, to give a thickness of about 50 μm, then applying the resin composition (A1) onto the adhesive to give a thickness of 0.5 mm, and exposing it to a light of a metal halide lamp. The cushioning layer for printing had a density of 0.56 g/cm$^3$. After the photosensitive resin composition (D) was applied to give a thickness of about 1.9 mm, it was exposed to a light of a metal halide lamp to obtain a cylindrical layer of a cured photosensitive resin. The exposed energy amount was 4000 mJ/cm$^2$ (a time-integrated value of illumination intensity as measured by "UV-35-APR Filter" (trademark, product of ORC MANUFACTURING CO., LTD.). The surface of the cured photosensitive resin layer was ground and polished to form a 1.6-mm thick printing original-plate layer made of the cured photosensitive resin.
Pattern engraving of the resulting cylindrical printing original-plate was conducted using a laser engraving machine manufactured by ZED Instruments. Dot patterns thus formed had a favorable conical shape. Thin line patterns had a favorable mountain shape. Patterns of reverse lines in solids had a favorable valley shape. Both thin lines and reverse printing lines in solids were formed well. No residue remained on the surface of the plate. There occurred no problem in adhesion at the interface between the cushion for printing and laser engraved printing plate layer
The results of the printability evaluation tests using the cylindrical printing plate thus obtained are shown in Table 1. The resulting printing plate made good results in any of ink coverage in solid areas, reproduction of reverse lines in solids, and dot reproduction in each of the printability evaluation tests. Particularly in the printability evaluation test 5, the plate showed good printing results even at a printing speed as high as 600 m/min.

(Example I-2)

In the same manner as Example 1-1 except that the density of the cushioning layer for printing was changed to 0.56 g/cm$^3$ by changing the kind and amount of the capsular fine particles, a cylindrical printing original-plate was formed. The capsular fine particles used in Example 1-2 had a true specific gravity of 0.112 g/cm$^3$.
The results of the printability evaluation test using the cylindrical printing plate thus obtained are shown in Table 1. The printing plate showed good results in any of ink coverage in solid areas, reproduction of reverse lines in solids, and dot reproduction.

(Example I-3)

In the same manner as Example I-1 except that the density of the cushioning layer for printing was changed to 0.55 g/cm$^3$ by changing the kind and amount of the capsular fine particles, a cylindrical printing original-plate was formed. The capsular fine particles used in Example I-3 were "MFL80GCCA" (trademark, product of Matsumoto Yushi-Seiyaku Co., Ltd.). They had an average particle diameter of about 20 μm and a true specific gravity of 0.112 g/cm$^3$.
The results of the printability evaluation test using the cylindrical printing plate thus obtained are shown in Table 1. The printing plate showed good results in any of ink coverage in solid areas, reproduction of reverse lines in solids, and dot reproduction.

(Example I-4)

In the same manner as Example I-1 except that the density of the cushioning layer for printing was changed to 0.56 g/cm$^3$ by changing the kind and amount of the capsular fine particles, a cylindrical printing original-plate was formed. The capsular fine particles used in Example I-4 were "MFL100SCA" (trademark, product of Matsumoto Yushi-Seiyaku Co., Ltd.). They had an average particle diameter of about 30 μm and a true specific gravity of 0.220 g/cm$^3$.
The results of the printability evaluation test using the cylindrical printing plate thus obtained are shown in Table 1. The printing plate showed good results in any of ink coverage in solid areas, reproduction of reverse lines in solids, and dot reproduction.

(Example I-5)

In the same manner as Example I-1 except that the density of the cushioning layer for printing was changed to 0.55 g/cm$^3$ by changing the kind and amount of the capsular fine particles, a cylindrical printing plate was formed. The capsular fine particles used in Example I-5 were "F80DE" (trademark, product of Matsumoto Yushi-Seiyaku Co., Ltd.). They had an average particle diameter of about 100 μm, had no calcium carbide fine particles on their surface, and had a true specific gravity of 0.0236 g/cm$^3$. The cure shrinkage of the cushioning layer was 6%. The peel adhesion strength between the cushioning layer and the hallow cylindrical substrate made of fiber reinforce plastic was 0.2 kg/cm.
The results of the printability evaluation test using the cylindrical printing plate thus obtained are shown in Table 1. The printing plate showed good results in any of ink coverage in solid areas, reproduction of reverse lines in solids, and dot reproduction.

(Example I-6)

(Preparation of photosensitive resin composition (A2) for manufacturing cushion for printing)

The capsular fine particles obtained in Example I-5 was mixed with 50 parts by weight of the resin (a1) of Example I-1, followed by the addition of 25 parts by weight of phenoxyethyl methacrylate and 25 parts by weight of phenoxyethyl acrylate as the organic compound (b).
As the photopolymerization initiator (c), 0.5 part by weight of 2,2-dimethoxy-2-phenylacetophenone (DMPAP), which was a cleavage type photopolymerization initiator, was added.
Further, 0.6 part by weight of 2,6-di-t-butyl-4-methylphenol and 1 part by weight of bis(1,2,2,6,6-pentamethyl-4-piperidyl) sebacate were added to the resulting mixture as additives to obtain a photosensitive resin composition (A2) in liquid form at 20°C.
The resin composition (A2) was in liquid form at 20°C. It had a viscosity, at 20°C, of 80 Pa·s or less as measured by a B-type viscometer. (Manufacturing of printing plate)
In the same manner to Example I-1 except that the resin composition (A2) was used as the photosensitive resin composition (A), a cylindrical printing plate was formed. The cushioning layer for printing had a density of 0.56 g/cm$^3$.
The results of the printability evaluation test using the resulting cylindrical printing plate are shown in Table 1. The printing

plate showed good results in any of ink coverage in solid areas, reproduction of reverse lines in solids, and dot reproduction.

(Example I-7)

(Preparation of thermosetting resin composition for manufacturing cushion for printing)

A thermosetting resin composition for manufacturing a cushion for printing was prepared by mixing 100 parts by weight of a thermosetting urethane rubber ("TC-551", product of Nippon Polyurethane Industry) with 94 parts by weight of a thermosetting urethane rubber ("ON-H19", product of Nippon Polyurethane Industry), and mixing 100 parts by weight of the resulting mixture with 12.4 parts by weight of capsular fine particles ("MFL100CA", trademark; product of Matsumoto Yushi-Seiyaku Co., Ltd.).
(Manufacturing printing plate)
In the same manner as Example I-1 except that a cushioning layer for printing made of a cylindrical cured material of a resin was obtained by applying the above-described thermosetting resin composition onto a hollow cylindrical substrate, which was attached to an air cylinder, had a thickness of 1.2 mm, and was made of fiber reinforced plastic, to give a thickness of 0.5 mm, followed by heating at 80°C for 3 hours, a cylindrical printing plate was formed. The cushioning layer thus obtained had a density of 0.62 g/cm$^3$.
The storage elastic modulus (E'), the loss elastic modulus (E"), and the loss tangent (tanδ), at 20°C and 1000 Hz, of the cushioning material for printing thus obtained were $1 \times 10^8$ Pa, $1.3 \times 10^7$ Pa and 0.14, respectively.
The results of the printability evaluation test using the resulting cylindrical printing plate are shown in Table 1. The ink coverage in solid areas and dot reproduction were inferior to those of Example I-3, but the printability as a whole was very good.

(Example I-8)

(Preparation of thermosetting resin composition for manufacturing cushion for printing)

A thermosetting resin composition for manufacturing a cushion for printing was prepared by mixing 100 parts by weight of a thermosetting urethane rubber prepolymer ("K-552", product of Koho Chemical Co.) with 5.4 parts by weight of a crosslinking agent and then mixing 100 parts by weight of the resulting mixture with 8.6 parts by weight of capsular fine particles ("MFL100CA", product of Matsumoto Yushi-Seiyaku Co., Ltd.).

(Manufacturing of printing plate)

In the same manner as Example I-1 except that a cushioning layer for printing made of a cylindrical cured material of a resin was obtained by applying the above-described thermosetting resin composition onto a hollow cylindrical substrate which was attached to an air cylinder, had a thickness of 1.2 mm, and was made of fiber reinforced plastic, to give a thickness of 0.5 mm, followed by heating at 110°C for 1 hour, a cylindrical printing plate was formed. The cushioning layer thus obtained had a density of 0.57 g/cm$^3$.
The storage elastic modulus (E'), the loss elastic modulus (E"), and the loss tangent (tanδ), at 20°C and 1000 Hz, of the cushioning material for printing thus obtained were $1.3 \times 10^8$ Pa, $7 \times 10^7$ Pa and 0.52, respectively.
The results of the printability evaluation test using the resulting cylindrical printing plate are shown in Table 1. The ink coverage in solid areas, reproduction of reverse lines in solids, and dot reproduction were slightly inferior to those of the printing plate of Example I-3, but the printability was almost the same level.

(Example I-9)

(Preparation of photosensitive resin composition (A6) for manufacturing cushion for printing)

To 60 parts by weight of the resin (a1) of Example I-1 was added 30 parts by weight of pentaerythritol trimethacrylate as the organic compound (b).
As the photopolymerization initiator (c), 0.5 part by weight of 2,2-dimethoxy-2-phenylacetophenone (DMPAP), which was a cleavage type photopolymerization initiator, was added.
Further, 0.6 part by weight of 2,6-di-t-butyl-4-methylphenol and 1 part by weight of bis(1,2,2,6,6-pentamethyl-4-piperidyl) sebacate were added to the resulting mixture as additives to obtain a resin composition (A6') in liquid form at 20°C.
A resin composition (A6) for manufacturing a cushion for printing was obtained by mixing 100 parts by weight of the resin composition (A6') with, as organic fine particles, 2.6 g of capsular fine particles ("MFL100CA", trademark, product

of Matsumoto Yushi-Seiyaku Co., Ltd.) having an average particle diameter of about 100 μm, which had been swelled in advance, in a planetary kneader.

(Manufacturing of printing plate)

In the same manner to Example I-1 except for the use of the resin composition (A6) as the photosensitive resin composition (A), a cylindrical printing plate was formed. The cushioning layer thus obtained had a density of 0.94 $g/cm^3$. The storage elastic modulus (E'), the loss elastic modulus (E"), and the loss tangent (tanδ), at 20°C and 1000 Hz, of the cushioning material for printing thus obtained were $2 \times 10^9$ Pa, $2 \times 10^8$ Pa and 0.1, respectively. The results of the printability evaluation test using the resulting cylindrical printing plate are shown in Table 1. The ink coverage in solids and reproduction of reverse lines in solids were most inferior among the printing plates obtained in Examples I, but the printability was generally good as a whole.

(Comparative Example I-1)

(Preparation of resin (a))

For use as the resin (a), a resin (a2) having, at the end thereof, a methacrylic group (about 2 polymerizable unsaturated groups per molecule on average) and having a number-average molecular weight of about 4000 was prepared by charging 1198 g of polycarbonate diol "PCDL T4672" (trademark; product of Asahi Kasei Corporation, number-average molecular weight: 1945, OH value: 57.7) and 52.8 g of tolylene diisocyanate in a 2-L separable flask equipped with a thermometer, a stirrer, and a reflux apparatus; reacting the resulting mixture for about 3 hours at 80°C; adding 48.5 g of 2-methacryloyloxy isocyanate; and the reacting the resulting mixture further for about 3 hours. The resulting resin was like sugar syrup at 20°C. It flowed by the application of an external force and did not restore the original shape even after removal of the external force.
In the $^1H$-NMR spectroscopy (nuclear magnetic resonance spectroscopy using a hydrogen atom as a nucleus to be observed) with tetramethylsilane (TMS) as a reference compound, the percentage of hydrogen atoms having a peak within chemical shift ranges of from 1.4 to 1.7 ppm, from 4.0 to 4.3 ppm, from 4.5 to 5.5 ppm was 35% relative to all the hydrogen atoms of the resin (a2).

(Preparation of photosensitive resin composition (A) for manufacturing cushion for printing)

To 67 parts by weight of the resin (a2) was added 33 parts by weight of phenoxyethyl acrylate as the organic compound (b).
As the photopolymerization initiator (c), 1 part by weight of 2-benzyldimethylamino-1-(4-morpholinophenyl)-butanone-1 which was a cleavage type photopolymerization initiator was added.
Furthermore, 1 part by weight of 3,9-bis[1,1-dimethyl-2-[β-(3-t-butyl-4-hydroxy-5-methylphenyl-propioxy)ethyl]2,4,8,10-tetraoxaspiro[5,5]undecane, 0.2 part by weight of triphenylphosphate, and 1 part by weight of bis(1,2,2,6,6-pentamethyl-4-piperidyl)sebacate were added as additives to prepare a photosensitive resin composition (A3) which was in liquid form at 20°C.
The photosensitive resin composition (A3) was in liquid form at 20°C. It had a viscosity at 20°C of 80 Pa·s or less as measured using a B type viscometer.

(Manufacturing of printing plate)

In the same manner as Example I-1 except for the use of the resin composition (A3) as the photosensitive resin composition (A), a cylindrical printing plate was formed.
The results of the printability evaluation test using the resulting cylindrical printing plate are shown in Table 1. The ink coverage in solid areas, reproduction of reverse lines in solids, and dot reproduction were all inferior to those of the printing plate obtained in Example.

(Comparative Example I-2)

In the same manner as Example I-1 except for the use of a polyethylene (PE) low-hardness cushion tape commercially available from S corporation as a cushioning layer for printing, a cylindrical printing plate was formed.
The results of the printability evaluation test using the resulting cylindrical printing plate are shown in Table 1. The ink coverage in solid areas, reproduction of reverse lines in solids, and dot reproduction were all inferior to those of the printing plate obtained in Example.

(Comparative Example I-3)

In the same manner as Example I-1 except for the use of a PE high-hardness cushion tape commercially available from S corporation as a cushioning layer for printing, a cylindrical printing plate was formed.
The results of the printability evaluation tests using the resulting cylindrical printing plate are shown in Table 1. The ink coverage in solid areas, reproduction of reverse lines in solids, and dot reproduction were all inferior to those of the printing plate obtained in Example.

(Comparative Example I-4)

In the same manner as Example I-1 except for the use of a polyurethane (PU) high-hardness cushion tape commercially available from R corporation as a cushioning layer for printing, a cylindrical printing plate was formed.
The results of the printability evaluation tests using the resulting cylindrical printing plate are shown in Table 1. The ink coverage in solid areas, reproduction of reverse lines in solids, and dot reproduction were all inferior to those of the printing plate obtained in Example.

(Comparative Example I-5)

In the same manner as Example I-1 except for the use of a PE high-hardness cushion tape commercially available from L corporation as a cushioning layer for printing, a cylindrical printing plate was formed.
The results of the printability evaluation tests using the resulting cylindrical printing plate are shown in Table 1. The ink coverage in solid areas, reproduction of reverse lines in solids, and dot reproduction were all inferior to those of the printing plate obtained in Example.

(Comparative Example I-6)

(Preparation of photosensitive resin composition (A) for manufacturing cushion for printing)

The resin composition (A3) of Comparative Example I-1 was stirred forcibly in a mixer to obtain a resin composition (A4) containing air bubbles. The resin composition (A4) was photocured and air bubbles present therein were observed under an optical microscope. As a result, the air bubbles had an average diameter of about 80 $\mu$m.

(manufacturing of printing plate)

In the same manner as Example I-1 except for the use of the resin composition (A4) as the photosensitive resin composition (A), a cylindrical printing plate was formed. The cushioning layer for printing had a density of 0.57 g/cm$^3$.
The results of the printability evaluation test using the resulting cylindrical printing plate are shown in Table 1. The ink coverage in solid areas, reproduction of reverse lines in solids, and dot reproduction were all inferior to those of the printing plates obtained in Examples.

(Comparative Example I-7)

(Preparation of resin (a))

For used as the resin (a), a resin (a4) having, at the end thereof, a methacrylic group (about 2.0 polymerizable unsaturated groups per molecule) and having a number-average molecular weight of about 30000 was prepared by charging 1252 g of polyester diol "KURARAY POLYOL P3010" (trademark; product of Kuraray Co., Ltd., number-average molecular weight: 37.5, OH value: 37.5) and 63.0 g of hexamethylene diisocyanate to a 2-L separable flask equipped with a thermometer, a stirrer, and a reflux apparatus; reacting the resulting mixture for about 3 hours under heating at 80°C; adding 13.6 g of 2-methacryloyloxy isocyanate; and then reacting the resulting mixture further for about 3 hours.
The resulting resin was like sugar syrup at 20°C. It flowed by the application of an external force and did not restore the original shape even after removal of the external force.
In the $^1$H-NMR spectroscopy (nuclear magnetic resonance spectroscopy using a hydrogen atom as a nucleus to be observed) with tetramethylsilane (TMS) as a reference compound, the percentage of hydrogen atoms having a peak within chemical shift ranges of from 1.4 to 1.7 ppm, from 4.0 to 4.3 ppm, from 4.5 to 5.5 ppm was 70% relative to all the hydrogen atoms of the resin (a4).

(Preparation of photosensitive resin composition (A) for manufacturing cushion for printing)

To 67 parts by weight of the resin (a4) were added 25 parts by weight of phenoxyethyl acrylate and 8 parts by weight of diethylene glycol monobutyl ether monomethacrylate as the organic compound (b). To the resulting mixture was added 5.1 parts by weight of porous fine-powder silica "Sylosphere C-1504" (trademark; product of Fuji Silysia Chemical Ltd., number-average particle diameter: 4.5 μm, specific surface area: 520 $m^2$/g, average pore size: 12 nm, pore volume: 1.5 ml/g, loss on ignition: 2.5 wt.%, oil absorption amount: 290 ml/100g). It was found as a result of observation with a scanning electron microscope that almost all the particles of the porous spherical silica "Sylosphere C-1504" had a true sphericity of 0.9 or greater.
As the photopolymerization initiator (c), 1 part by weight of benzophenone which was a hydrogen abstraction type photopolymerization initiator and 0.6 part by weight of 2,2-dimethoxy-2-phenylacetophenone (DMPAP) which was a cleavage type photopolymerization initiator were added.
Furthermore, 1 part by weight of 3,9-bis[1,1-dimethyl-2-[β-(3-t-butyl-4-hydroxy-5-methylphenyl-propioxy)ethyl]2,4,8,10-tetraoxaspiro[5,5]undecane, 0.2 part by weight of triphenylphosphate, 1 part by weight of bis(1,2,2,6,6-pentamethyl-4-piperidyl)sebacate, and 1 part by weight of a methylstyryl-modified silicone oil ("KF-41 0", trade name; product of Shin-etsu Chemical Co., Ltd.) were added as additives to prepare a resin composition (A5) in liquid form at 20°C. The resin composition (A5) was in liquid form at 20°C.

(Manufacturing of printing plate)

In the same manner as Example 1-1 except for the use of the resin composition (A5) as the photosensitive resin composition (A), a cylindrical printing plate was formed. The cushioning layer for printing had a density of 1.19 g/$cm^3$. The cushioning layer had a cure shrinkage of 3%. The peel adhesion strength between the cushioning layer and the hollow cylindrical substrate made of fiber reinforced plastic was less than 0.03 kg/cm.
The results of the printability evaluation test using the resulting cylindrical printing plate are shown in Table 1. The ink coverage in solid areas, reproduction of reverse lines in solids, and dot reproduction were all inferior to those of the printing plate obtained in Example.

(Comparative Example I-8)

In the same manner as Example I-1 except for the use of a polyurethane (PU) low-hardness cushion tape commercially available from R corporation as a cushion for printing, a cylindrical printing plate was formed.
The results of the printability evaluation test using the resulting cylindrical printing plate are shown in Table 1. The ink coverage in solid areas, reproduction of reverse lines in solids, and dot reproduction were all inferior to those of the printing plate obtained in Example.

(Comparative Example I-9)

(Preparation of thermosetting resin composition for manufacturing cushion for printing)

A thermosetting resin composition for manufacturing a cushion for printing was obtained by mixing 100 parts by weight of a thermosetting urethane rubber ("KE1935", product of Shin-etsu Chemical Co., Ltd.) with 100 parts by weight of a thermosetting urethane rubber ("KE-1935B", product of Shin-etsu Chemical Co., Ltd.) and mixing 100 parts by weight of the resulting mixture with 12 parts by weight of capsular fine particles ("MFL100CA", product of Matsumoto Yushi-Seiyaku Co., Ltd.).

(Manufacturing of printing plate)

In the same manner as Example I-1 except that a cushioning layer for printing made of a cylindrical cured material of a resin was obtained by applying the above-described thermosetting resin composition onto a hollow cylindrical substrate attached to an air cylinder, having a thickness of 1.2 mm and made of a fiber reinforced plastic to give a thickness of 0.5 mm, followed by heating at 120°C for 30 minutes, a cylindrical printing plate was formed. The cushioning layer thus obtained had a density of 0.63 g/$cm^3$.
The storage elastic modulus (E'), the loss elastic modulus (E"), and the loss tangent (tanδ), at 20°C and 1000 Hz, of the cushioning material for printing thus obtained were $7 \times 10^7$ Pa, $9 \times 10^6$ Pa and 0.14, respectively.
The results of the printability evaluation test using the resulting cylindrical printing plate are shown in Table 1. The reproduction of reverse lines in solids and dot reproduction were inferior to those of the printing plate of Example I-9.
From Table 1, it has been confirmed that in Examples I-1 to I-9 in which the printing plates having a cushioning

layer for printing manufactured from the cushioning material for printing according to the present invention are used, prints have a high quality, showing good results in ink coverage in solid areas, reproduction of reverse lines in solids, and dot reproduction. In particular, in Example I-1, a print has a high quality even if printing is performed at a speed as high as 600 m/min (printability evaluation test 5).
On the other hand, in Comparative Examples I-2 to I-5, and I-8 in which the printing plates having, as a cushioning layer for printing, commercially available cushion tapes for printing each having a storage elastic modulus (E') less than 1.0 $\times 10^8$ Pa at 20°C and 1000 Hz are used, prints do not have a satisfactory quality.
Even printing plates having a cushioning layer for printing manufactured from a thermally cured material of a thermosetting resin composition or a photocured material of a photosensitive resin composition do not provide a satisfactory printing quality in Comparative Examples I-1, I-6, I-7, and I-9 in which the printing plates have a storage elastic modulus (E') less than 1.0 $\times 10^8$ Pa at 20°C and 1000 Hz.
[Table 1]

| | | Ex. I-1 | Ex. I-2 | Ex. I-3 | Ex. I-4 | Ex. I-5 | Ex. I-6 | Ex. I-7 | Ex. I-8 | Ex. I-9 | Comp. Ex. I-1 | Comp. Ex. I-2 | Comp. Ex. I-3 | Comp. Ex. I-4 | Comp. Ex. I-5 | Comp. Ex. I-6 | Comp. Ex. I-7 | Comp. Ex. I-8 | Comp. Ex. I-9 |
|---|---|---|---|---|---|---|---|---|---|---|---|---|---|---|---|---|---|---|---|
| Storage elastic modulus at 20°C and 1000 Hz ($\times 10^8$ Pa) | | 5.00 | 4.90 | 1.60 | 1.90 | 4.40 | 4.20 | 1.00 | 1.30 | 20.00 | 0.66 | 0.01 | 0.14 | 0.16 | 0.12 | 0.85 | 0.80 | 0.05 | 0.70 |
| Loss elastic modulus at 20°C and 1000 Hz ($\times 10^7$ Pa) | | 21.50 | 21.56 | 5.28 | 6.08 | 19.80 | 21.00 | 1.30 | 7.00 | 20.00 | 6.34 | 0.02 | 0.29 | 1.04 | 0.29 | 3.57 | 3.84 | 0.33 | 0.90 |
| Loss tangent at 20°C and 1000 Hz | | 0.43 | 0.44 | 0.33 | 0.32 | 0.45 | 0.50 | 0.14 | 0.52 | 0.10 | 0.96 | 0.20 | 0.21 | 0.65 | 0.24 | 0.42 | 0.48 | 0.63 | 0.14 |
| Impact resilience as measured by falling ball method at 23°C (%) | | 7 | 8 | 19 | 18 | 7 | 8 | - | - | - | 15 | 57 | 35 | 23 | 33 | 25 | 27 | 30 | - |
| Printability evaluation test 1 | Ink coverage in solid areas | A | A | A | A | A | A | A | A | B | B | C | B | B | B | C | A | C | B |
| | Reverse lines in solids | A | A | A | A | A | A | B | A | B | C | B | B | B | B | C | D | B | C |
| | Dot reproduction | A | A | A | A | A | A | A | A | A | C | C | B | B | B | C | D | C | D |
| Printability evaluation test 2 | Ink coverage in solid areas | A | - | - | - | - | - | - | - | - | - | - | B | B | B | - | - | - | - |
| | Reverse lines in solids | A | - | - | - | - | - | - | - | - | - | - | C | C | B | - | - | - | - |
| | Dot reproduction | A | - | - | - | - | - | - | - | - | - | - | C | C | B | - | - | - | - |
| Printability evaluation test 3 | Ink coverage in solid areas | A | - | - | - | - | - | - | - | - | - | - | - | - | B | - | - | - | - |
| | Reverse lines in solids | A | - | - | - | - | - | - | - | - | - | - | - | - | B | - | - | - | - |
| | Dot reproduction | A | - | - | - | - | - | - | - | - | - | - | - | - | C | - | - | - | - |
| Printability evaluation test 4 | Ink coverage in solid areas | A | - | - | - | - | - | - | - | - | - | - | - | - | B | - | - | - | - |
| | Reverse lines in solids | A | - | - | - | - | - | - | - | - | - | - | - | - | D | - | - | - | - |
| | Dot reproduction | A | - | - | - | - | - | - | - | - | - | - | - | - | D | - | - | - | - |
| Printability evaluation test 5 | Ink coverage in solid areas | A | - | - | - | - | - | - | - | - | - | - | - | - | C | - | - | - | - |
| | Reverse lines in solids | A | - | - | - | - | - | - | - | - | - | - | - | - | D | - | - | - | - |
| | Dot reproduction | A | - | - | - | - | - | - | - | - | - | - | - | - | D | - | - | - | - |

A: Very good, B: Good, C: Slightly good, D: Inferior

[Examples II-1 to II-3 and Comparative Examples II-1 to II-3」

Measurement methods and evaluation methods employed in Examples II-1 to II-3 and Comparative Examples II-1 to II-3 will hereinafter be described.

(II-1 ) Viscosity

The viscosity of a photosensitive resin composition was measured at 20°C by using a B type viscometer ("B8H", trademark, product of Tokyo Keiki Kogyo/Japan), while the viscosity of the resin (a) was measured at 50°C

(II-2) Measurement of number-average molecular weight

The number-average molecular weight of the resin (a) to be used in the present invention was a number-average molecular weight as converted in polystyrene determined by gel permeation chromatography (GPC) using polystyrene having a known molecular weight. The number-average molecular weight was measured using a high performance GPC apparatus ("HLC-8020"; trademark, product of Tosoh Corporation/Japan) and a polystyrene packed column ("TSKgel GMHXL", trade name; product of Tosoh Corporation/Japan) while using tetrahydrofuran (THF) as a developing solution. The column temperature was set at 40°C. A THF solution having a resin concentration of 1 wt.% was used as a sample to be poured into the GPC apparatus and 10 μl of the sample was charged in the GPC apparatus. For the resin (a), a UV absorption detector was used as a detector and a light having a wavelength of 254 nm was used as a monitoring light. Since the resin (a) to be used in Examples II or Comparative Examples II had a polydispersity (MW/Mn) exceeding 1.1, the number-average molecular weight Mn as measured by GPC was used for resin (a). Since the polydispersity (Mw/Mn) of the organic compound (b) as measured by GPC was smaller than 1.1, the molecular weigh as determined by calculating from a molecular structure identified using nuclear magnetic resonance spectroscopy (NMR spectroscopy) was used for the organic compound (b).

(II-3) Measurement of the number of polymerizable unsaturated groups

The average number of polymerizable unsaturated groups present in the molecule of the synthesized resin (a) was determined by removing unreacted low molecular components from the resin by using liquid chromatography and then analyzing the molecular structure by using nuclear magnetic resonance spectroscopy (NMR spectroscopy).

(II-4) Measurement of ASKER-C hardness

The ASKER-C hardness was measured using a rubber/plastic hardness tester ("ASKER Model C", trademark, product of Kobunshi Keiki Co., Ltd.).

(II-5) Laser engraving

Laser engraving was carried out using a carbon dioxide gas laser engraving machine ("ZED-mini-1000", trademark; product of ZED Instruments/England, equipped with a 250W-output carbon dioxide gas laser, product of Coherent Inc./United States). Engraving was carried out by forming a pattern including halftone dots (80 lines per inch and a tone value of 10%), line drawings with a convex having a width of 500 μm, and a reverse line having a width of 500 μm. The engraving depth was set at 0.55 mm because when the engraving depth is set to be unduly large, a sufficient area of the top portion of fine halftone dot pattern cannot be ensured and the patterns get out of shape and become unclear.

(II-6) Evaluation of printing

Printing evaluation of a printing plate made using laser engraving was conducted. A desktop type poof press ("Flexlploofer 100", trademark; product of RK Print Coat Instrument/England) was used in printing. The printing plate was attached onto a cylinder with a double-sided tape and sheet-feed printing was conducted on a polyethylene film with a solvent ink of a cyan color.

(II-7) Swelling test with solvent

A solvent used for the swelling test was a mixture composed of 20 vol.% of ethyl acetate and 80 vol.% of isopropyl alcohol. A test sample had a width of 10 mm, a length of 50 mm, and a thickness of 1.7 mm. The test sample was immersed in the solvent at 20°C for 24 hours and a weight change and a thickness change before and after immersion

were determined.

(II-8) Compression characteristics of cushion

The compression characteristics of a cushion were measured using a compression characteristics evaluation apparatus ("Autograph AGS-J", trademark; product of Shimadzu Corporation) at 23°C. Four sheet-like cured photosensitive resins each having a thickness of 0.5 mm were layered one after another and used for the measurement. The compression speed was set at 1.0 mm/min.

(II-9) Tensile test

The tensile test was performed using "Autograph AGS-J" (trademark; product of Shimadzu Corporation). The term "tensile strength" means a value obtained by pulling a test sample at a predetermined rate until it breaks and dividing the maximum strength shown until the breakage of the test sample by the cross-sectional area of the test sample. The "elongation" means an elongation percentage when the test sample breaks.

(Manufacturing Example 1)

A resin (i) having, at the end thereof, a methacrylic group (about 1 polymerizable unsaturated group per molecule) and having a number-average molecular weight of about 13000 was obtained by adding 447 g of polycarbonate diol "PCDL L4672" (trademark; product of Asahi Kasei Corporation, number-average molecular weight: 1945, OH value: 57.7) and 30.6 g of tolylene diisocyanate to a 1-L separable flask equipped with a thermometer, a stirrer, and a reflux apparatus, reacting the resulting mixture under heating at 80°C for about 3 hours, adding 5.74 g of 2-methacryloyloxy isocyanate, and then reacting the resulting mixture further for about 3 hours. The resulting resin was like sugar syrup at 20°C. It flowed by the application of an external force and did not restore the original shape even after removal of the external force.
In the 1H-NMR spectroscopy (nuclear magnetic resonance spectroscopy using a hydrogen atom as a nucleus to be observed) with tetramethylsilane (TMS) as a reference compound, the percentage of hydrogen atoms having a peak within chemical shift ranges of from 1.4 to 1.7 ppm, from 4.0 to 4.3 ppm, from 4.5 to 5.5 ppm was 44% relative to all the hydrogen atoms of the resin (i). The resin had a viscosity at 50°C of 3000 Pa·s.

(Manufacturing Example 2)

A resin (ii) having, at the end thereof, a methacrylic group (about 1 polymerizable unsaturated group per molecule) and having a number-average molecular weight of about 15000 was prepared by adding 411 g of 1,4-hydrogenated polybutadiene polyol "L-2203-2" (trademark; product of Kraton Polymer Japan Co., Ltd.) and 16.31 g of tolylene diisocyanate to a 1-L separable flask equipped with a thermometer, a stirrer, and a reflux apparatus; reacting the resulting mixture for about 3 hours under heating at 80°C; adding 4.42 g of 2-methacryloyloxy isocyanate; and reacting the resulting mixture further for about 3 hours. The resulting resin was like sugar syrup at 20°C. It flowed by the application of an external force and did not restore the original shape even after removal of the external force.
In the $^1$H-NMR spectroscopy (nuclear magnetic resonance spectroscopy using a hydrogen atom as a nucleus to be observed) with tetramethylsilane (TMS) as a reference compound, the percentage of hydrogen atoms having a peak within chemical shift ranges of from 1.4 to 1.7 ppm, from 4.0 to 4.3 ppm, from 4.5 to 5.5 ppm was 60% relative to all the hydrogen atoms of the resin (ii).

(Manufacturing Example 3)

A resin (iii) having, at the end thereof, a methacrylic group (about 2 polymerizable unsaturated groups per molecule) and having a number-average molecular weight of about 10000 was prepared by adding 447.24 g of polycarbonate diol "PCDL L4672" (trademark; product of Asahi Kasei Corporation, number-average molecular weight: 1990, OH value: 56.4) and 30.83 g of tolylene diisocyanate to a 1-L separable flask equipped with a thermometer, a stirrer, and a reflux apparatus; reacting the resulting mixture for about 3 hours under heating at 80°C; adding 14.83 g of 2-methacryloyloxy isocyanate; and the reacting the resulting mixture further for about 3 hours. The resulting resin was like sugar syrup at 20°C. It flowed by the application of an external force and did not restore the original shape even after removal of the external force.

(Example II-1)

A photosensitive resin composition (iv) was prepared by mixing 65 parts by weight of the resin (i) as the resin (a), 33 parts by weight of phenoxyethyl acrylate as the organic compound (b), 0.6 part by weight of 2,2-dimethoxy-2-phenylacetophenone as the photopolymerization initiator, and 1 part by weight of 2,6-di-t-butylacetophenone as a polymerization inhibitor. The photosensitive resin composition (iv) had a viscosity at 20°C of 1600 Pa·s. A photosensitive resin composition (v) containing air bubbles therein was prepared by mixing, in a mixer, 100 parts by weight of the photosensitive resin composition (iv) with 0.5 part by weight of ultrafine particle silica ("Aerogil, R805", trademark; product of Nihon Aerosil K.K., average particle diameter: about 12 nm (in brochure)) having a hydrophobic surface. The average diameter of the air bubbles present in the photosensitive resin composition (v) was observed under an optical microscope, resulting in about 80 μm. The air bubbles were present in the photosensitive resin composition (v) stably for long hours.

A cushion was obtained by forming the photosensitive resin composition (v) containing air bubbles therein and prepared in the above manner into a 0.5-mm thick sheet on a PET film, covering the sheet with a 15-μm thick PET cover film, and irradiating a light from a high-pressure mercury lamp to the exposed surface of the photosensitive resin layer in the atmosphere. An exposure energy amount was 4000 mJ/cm$^2$ (a time-integrated value of illumination intensity as measured by "UV-35-APR Filter" (trademark, product of ORC MANUFACTURING CO., LTD.)).
The cured photosensitive resin obtained by photocuring of the air-bubble-containing photosensitive resin composition (v) had an ASKER-C hardness of 65 degree. When the ASKER-C hardness was measured, the surface PET cover film was peeled off.

A photosensitive resin composition (vi) in liquid form at 20°C was prepared by adding, to 100 parts by weight of the resin (iii) obtained in Manufactuiring Example 3, 25 parts by weight of phenoxyethyl methacrylate, 19 parts by weight of polypropylene glycol monomethacrylate, 5 parts by weight of trimethylolpropane triacrylate, and 1 part by weight of methylstyryl-modified silicone oil ("KF-41 0", trademark; product of Shin-etsu Chemical Co., Ltd.) as the organic compound (b), 5 parts by weight of porous fine-powder silica "Sylosphere C-1504" (trademark; product of Fuji Silysia Chemical Ltd., which will hereinafter be abbreviated as "C-1504", number-average particle diameter: 4.5 μm, specific surface area: 520 m$^2$/g, average pore size: 12 nm, pore volume: 1.5 ml/g, loss on ignition: 2.5 wt.%, oil absorption amount: 290 ml/100g) as an inorganic porous material, 0.6 part by weight of 2,2-dimethoxy-2-phenylacetophenone and 1 part by weight of benzophenone as the photopolymerization initiator, and 0.5 part by weight of 2,6-di-t-butylacetophenone as an additive. The resulting photosensitive resin composition was used for forming a laser engravable printing plate layer. The photosensitive resin composition (vi) in liquid form had a viscosity at 20°C of 1200 Pa·s. A laser engravable printing original-plate layer was then formed by forming the resulting photosensitive resin composition (vi) into a sheet of 1.7 mm thick on a PET film, covering it with a PET cover film having a thickness of 15 μm, and irradiating a light from a high-pressure mercury lamp to the exposed surface of the photosensitive resin layer in the atmosphere. The exposure energy amount was 4000 mJ/cm$^2$ (a time-integrated value of illumination intensity as measured by "UV-35-APR Filter" (trademark, product of ORC MANUFACTURING CO., LTD.)). The PET films adhered on both sides of the laser engravable printing original-plate layer were peeled off and the printing original-plate layer was attached over the cushion via a double-sided adhesive tape to form a sheet-like printing original plate having a laser engravable layer over the cushion.

A sheet-like printing plate was then formed by winding the sheet-like printing original-plate thus obtained around a cylinder and forming a pattern on the original plate by using a carbon dioxide gas laser engraving machine An engraving residue which had remained a little on the surface of the resulting sheet-like printing plate was washed off by a high-pressure steam jet cleaner. With a solvent ink and a polyethylene film used in combination, printing was performed using a desktop type proof press. As a result, a print with vivid dot patterns was obtained. Reverse lines in solids were also reproduced sufficiently. The solvent ink contained 20 vol.% of ethyl acetate and 80 vol.% of isopropyl alcohol as solvents.

Printing of 10000 m with another sheet-like printing plate formed in the same manner was performed using a flexographic printing machine. No problem occurred during printing and no dot gain was observed. Separately, a sample for swelling test with solvent was prepared by forming the photosensitive resin composition (iv) into a sheet of 1.7 mm thick on a PET film, covering the sheet with a PET cover film of 15 μm thick, and irradiating a light from a high-pressure mercury lamp to the exposed surface of the photosensitive resin layer in the atmosphere. The exposure energy amount was 4000 mJ/cm$^2$ (a time-integrated value of illumination intensity as measured by "UV-35-APR Filter" (trademark, product of ORC Manufacturing Co., Ltd.). The resulting test sample was immersed in a solvent made of 20 vol.% of ethyl acetate and 80 vol.% of isopropyl alcohol and a weight change before and after immersion was measured, resulting in 8.7 wt.%. A change in film thickness was 9%.

Further, a sample for tensile test was prepared by forming a sheet-like photocured material of 1 mm thick from the photosensitive resin composition (iv) and punching it out into a dumbbell form. A test portion of the sample had a width of 3 mm and a length of 30 mm. As a result of the test, it showed an elongation of 425%, tensile strength of 1.3 x $10^7$ Pa, and a 100% modulus of $2.3 \times 10^6$ Pa, showing that it was a considerably tough resin for a material for forming a cushion. The tensile test was performed using "Autograph AGS-J" (trademark, product of Shimadzu Corporation).

(Example II-2)

A photosensitive resin composition (vii) was prepared by mixing 80 parts by weight of the resin (ii) as the resin (a), 20 parts by weight of lauryl methacrylate and 1 part by weight of a methylstyryl-modified silicone oil ("KF-410", trademark, product of Shin-etsu Chemical Co., Ltd.) as the organic compound (b), 0.6 part by weight of 2,2-dimethyoxy-2-phenylacetophenone as the photopolymerization initiator, and 1 part by weight of 2,6-di-t-butylacetophenone as a polymerization inhibitor. The photosensitive resin composition (vii) had a viscosity at 20°C of 880 Pa·s. Then, a photosensitive resin composition (viii) containing air bubbles therein was prepared by mixing 100 parts by weight of the photosensitive resin composition (vii) with 0.5 part by weight of ultrafine particle silica having a hydrophobic surface ("Aerogil, R805", trademark; product of Nippon Aerosil K.K., average particle diameter; about 12 nm (in brochure)) in a mixer to prepare. The average diameter of the air bubbles present in the photosensitive resin composition (viii) observed under a optical microscope was about 120 μm The photosensitive resin composition (viii) containing air bubbles therein and prepared in the above manner was formed into a 0.5-mm thick sheet on a PET film and then, the sheet was covered with a 15-μm thick PET cover film. The surface of the resulting sheet from which the photosensitive resin layer appeared was exposed to a light from a high-pressure mercury lamp in the atmosphere. The exposure energy amount was 4000 $mJ/cm^2$ (a time-integrated value of illumination intensity as measured by "UV-35-APR Filter" (trademark, product of ORC Manufacturing Co., Ltd.).

A cured photosensitive resin obtained by photocuring the air-bubble-containing photosensitive resin composition (viii) had an ASKER-C hardness of 60 degree. When the ASKER-C hardness was measured, the surface PET cover film was peeled off.

A laser engravable printing original-plate of 1.7 mm thick was formed in the same manner as Example II-1, and it was layered over the resulting cushion via a double-sided adhesive tape to obtain a sheet-like printing plate.

A concave-convex pattern was formed on the surface by using a carbon dioxide laser engraving machine in the same manner as Example II-1, followed by evaluation of printing with a desk-top type proof press. As a result, a print having dot patterns printed vividly thereon was obtained. Reverse lines in solids was also reproduced sufficiently.

A printing using a flexographic printing machine was evaluated in the same manner as Example II-1. A good print was obtained without any particular problem.

Separately, a sample for swelling test with solvent was prepared by forming the photosensitive resin composition (vii) into a sheet of 1.7 mm thick on a PET film, covering the sheet with a PET cover film of 15 μm thick, and irradiating a light from a high-pressure mercury lamp to the exposed surface of the photosensitive resin layer in the atmosphere. The exposure energy amount was 4000 $mJ/cm^2$ (a time-integrated value of illumination intensity as measured by "UV-35-APR Filter" (trademark, product of ORC Manufacturing Co., Ltd.). The resulting test sample was immersed in a solvent made of 20 vol.% of ethyl acetate and 80 vol.% of isopropyl alcohol and a weight change before and after immersion was measured, resulting in 6.6 wt.%. A change in film thickness was 7%.

(Example II-3)

A photosensitive resin composition (ix) for cushion was prepared by mixing 100 parts by weight of the photosensitive resin composition (iv) prepared in Example II-1 with 10.6 g of, as the organic fine particles, capsular fine particles ("MFL100CA", trademark, product of Matsumoto Yushi-Seiyaku Co., Ltd.) having an average particle diameter of about 100 μm, which had been ballooned in advance by heating, in a planetary kneader. The capsular fine particles had calcium carbonate fine particles attached thereon.

A photosensitive resin composition (x) was prepared by mixing 80 parts of the resin (iii), 20 parts by weight of phenoxyethyl methacrylate, 10 parts by weight of butoxydiethylene glycol methacrylate, and 1 part by weight of a methylstyryl-modified silicone oil ("KF-410", trademark; product of Shin-etsu Chemical Co., Ltd.) as the organic compound (b), 0.6 part by weight of 2,2-dimethoxy-2-phenylacetophenone and 1 part by weight of benzophenone as the photopolymerization initiator, 1 part by weight of 2,6-di-t-butylacetophenone as a polymerization inhibitor, and 5 parts by weight of spherical porous silica having an average particle diameter of 3.5 μm as another additive. The photosensitive resin composition (x) had a viscosity at 20°C of 1300 Pa·s.

A cushion made of a cylindrical cured photosensitive resin was obtained by applying a UV-curable adhesive onto a hollow cylindrical substrate, which was attached to an air cylinder, had a thickness of 1.2 mm, and was made of fiber reinforced plastic, to give a thickness of about 50 μm, applying the photosensitive resin composition (ix) onto the resulting substrate to give a thickness of 0.5 mm, and exposing it to a light of a metal halide lamp. After the photosensitive resin composition (x) was layered over the cushion to give a thickness of about 1.9 mm, the resulting cushion was exposed to a light of a metal halide lamp to obtain a cylindrical cured photosensitive resin. The exposure energy amount was 4000 $mJ/cm^2$ (a time-integrated value of illumination intensity as measured by "UV-35-APR Filter" (trademark, product of ORC Manufacturing Co., Ltd.)). The surface of the photocured material was ground and polished to form a 1.7-mm thick printing original-plate layer made of the cured photosensitive resin layer.

Separately, the photosensitive resin composition (ix) was applied onto a PET film to give a thickness of 0.5 mm, followed by exposure as in Example II-1 to obtain a cured photosensitive resin containing therein capsular fine particles. The cushion made of the cured photosensitive resin had a density of 0.6 $g/cm^3$.
Pattern engraving of the resulting cylindrical printing original-plate was conducted using a laser engraving machine manufactured by ZED. Dot patterns thus formed had a desirable conical shape. No residue remained on the surface of the plate.
A concave-convex pattern was formed on the surface of the printing original-plate layer by using laser engraving to form a hollow cylindrical printing plate. The hollow cylindrical printing plate was attached to a flexographic printing machine having an air cylinder and printing was performed with a solvent ink containing 10 vol.% of ethyl acetate and isopropyl alcohol as the solvent. A print having a good quality with vivid dot portions and fine character portions was obtained. Printing of 10000 m was performed at a printing speed of 200 m/min, but there occurred no problem in the adhesion at the interface between the cushion and laser engravable printing plate layer. Widening of a dot pattern due to swelling of the hollow cylindrical printing plate did not occur during printing.
Separately, the photosensitive resin composition (ix) was applied to a PET film subjected to release treatment with a silicone compound to give a thickness of 0.5 mm, followed by exposure in the same manner as Example II-1 to obtain a cured photosensitive resin containing therein capsular fine particles. It was provided as a sample for measuring compression characteristics of a cushion. The PET film subjected to release treatment was separated from the cured photosensitive resin and four sheets of the cured photosensitive resins were layered one after another to prepare a sample. The compression characteristics of the cushion thus obtained, that is, a relation between a compressive strain and a stress is illustrated in FIG. 1. The stress at the time when the compressive strain was 100 $\mu$m was $4 \times 10^4$ Pa.
Separately, the photosensitive resin composition (x) was applied to a PET film subjected to release treatment with a silicone compound to give a thickness of 0.5 mm, followed by exposure in the same way as Example II-1 to obtain a cured photosensitive resin. The resulting cured photosensitive resin was provided as a sample for measuring the compression characteristics of the cured photosensitive resin. The PET film subjected to release treatment was separated from the cured photosensitive resin and a sample was obtained by layered four sheets of the cured photosensitive resin one after another. The stress at the time when the compressive strain was 100 $\mu$m was $8.5 \times 10^4$ Pa.

[Comparative Example II-1]

A photosensitive resin composition (xi) in the solid form at 20°C was prepared by kneading, in a kneader at 130°C, 60 parts by weight of an SBS thermoplastic elastomer (SBS: polystyrene/polybutadiene/polystyrene block copolymer) having a number-average molecular weight of about 130000 as the resin (a), 3 parts by weight of 1,9-nonanediol diacrylate as the organic compound (b), 30 parts by weight of liquid polybutadiene having a number-average molecular weight of about 2000 as a plasticizer, 0.6 part by weight of 2,2-dimethoxy-2-phenylacetophenone and 1 part by weight of benzophenone as the photopolymerization initiator, and 0.3 part by weight of 2,6-di-t-butyl-4-methylphenol as a polymerization inhibitor. The SBS elastomer used as the resin (a) is a hydrocarbon compound having, in the molecule thereof, none of a urethane bond, a urea bond, and an amide bond.
The photosensitive resin composition (xi) thus obtained was extruded on a PET film of 125 $\mu$m thick under heating by an extruder to give a thickness of 0.5 mm to obtain a sheet-like photosensitive resin composition. The surface of the composition was covered with a PET cover film of 15 $\mu$m thick, followed by exposure as in Example II-1 to obtain a cured photosensitive resin.
With the cured photosensitive resin as a cushion, a sheet-like printing original-plate having a laser engravable layer layered thereover was made as in Example II-1. The sheet-like printing original-plate thus obtained was engraved with a carbon dioxide gas laser engraving machine to form a concave-convex pattern on the surface of it.
As in Example II-1, printing of 10000 m was performed using a flexographic printing machine. During printing, widening and unevenness of dot portions were observed.

(Comparative Example II-2)

An unsaturated polyether polyurethane resin (xii) having a methacrylate group at both ends thereof was obtained by synthesizing a polyether polyurethane having hydroxyl groups at both ends thereof and a number-average molecular weight of 23000 from polyether diol and tolylene diisocyanate and reacting these hydroxyl groups with 2-methacryloyloxy isocyanate. In the $^1$H-NMR spectroscopy (nuclear magnetic resonance spectroscopy) of the resulting resin (xi) using tetramethylsilane (TMS) as a reference compound, the percentage of hydrogen atoms having a peak within chemical shift ranges of from 1.4 to 1.7 ppm, from 4.0 to 4.3 ppm, from 4.5 to 5.5 ppm was 10% relative to all the hydrogen atoms of the resin (xii).
A photosensitive resin composition (xiii) was obtained by mixing 100 parts by weight of the resin (xii) as the resin (a), 20 parts by weight of diethylene glycol monobutyl ether monomethacrylate, 12 parts by weight of diethylene glycol 2-ethylhexyl ether acrylate, and 1 part by weight of trimethylolpropane trimethacrylate as the organic compound (b), 1 part by weight of 2,2-dimethoxy-2-phenylacetophenone as the photopolymerization initiator, and 1 part by weight of 2,6-di-t-butylacetophenone as a polymerization inhibitor. The photosensitive resin (xiii) thus obtained had a viscosity at 20°C of 40 Pa·s.
In the same manner as Example II-3 except for the use of the photosensitive resin composition (xiii) instead of the photosensitive resin composition (ix), a hollow cylindrical printing plate was formed. Flexographic printing was performed in the same manner as Example II-3 by using the hollow cylindrical printing plate thus obtained, but widening and unevenness of dot portions were observed even at the initial stage of printing and during printing, further deterioration in printing quality occurred.
Separately, a sheet-like photocured material was formed using the photosensitive resin composition (xiii) and it was provided as a sample for swelling test with a solvent. The resulting test sample was immersed in a solvent composed of 20 vol.% of ethyl acetate and 80 vol.% of isopropyl alcohol and a weight change before and after immersion was measured. As a result, it exceeded 100 wt.% whichi was unduly high.
Separately, a sheet-like photocured material of 2 mm thick was obtained using the photosensitive resin composition (xiii) and its compression characteristics were measured. As a result, it had a stress of $1 \times 10^5$ Pa at a compressive strain of 100 $\mu$m.

(Comparative Example II-3)

A polyurethane having a hydroxyl group at an end thereof was obtained by reacting a 5:3 (weight ratio) mixture of a polyoxypropylene/polyoxyethylene block copolymer and poly(3-methyl-1,5-pentanediol adipate) with tolylene diisocyanate. The terminal hydroxyl group was then reacted with 2-methacryloyloxy isocyanate to obtain an unsaturated polyurethane resin (xiv) having a methacrylate group at both ends thereof and having a number-average molecular weight of 22000. In the $^1$H-NMR spectroscopy (nuclear magnetic resonance spectroscopy using a hydrogen atom as a nucleus to be observed) with tetramethylsilane (TMS) as a reference compound, the percentage of hydrogen atoms having a peak within chemical shift ranges of from 1.4 to 1.7 ppm, from 4.0 to 4.3 ppm, from 4.5 to 5.5 ppm was 25% relative to all the hydrogen atoms of the resin (xiv). The resin had a viscosity at 50°C of 420 Pa·s.
A photosensitive resin composition (xv) was prepared by mixing 70 parts by weight of the resin (xiv) as the resin (a), 20 parts by weight of diethylene glycol monobutyl ether monomethacrylate, 15 parts by weight of diethylene glycol 2-ethylhexyl ether acrylate, and 2 parts by weight of trimethylolpropane trimethacrylate as the organic compound (b), 1 part by weight of 2,2-dimethoxy-2-phenylacetophenone as the photopolymerization initiator, and 1 part by weight of 2,6-di-t-butylacetophenone as a polymerization inhibitor. A photosensitive resin composition (xvi) obtained by mixing the resulting photosensitive resin composition (xv) with air bubbles by using a stirrer had a viscosity at 20°C of 80 Pa·s. The average particle diameter of the air bubbles present in the photosensitive resin composition (xvi) was observed under an optical microscope, resulting in about 120 $\mu$m.
In the same manner as Example II-1 except for the use of the photosensitive resin composition (xvi) instead of the photosensitive resin composition (v), a sheet-like printing original-plate having a laser engravable layer layered over a sheet-like cushion was obtained.
The sheet-like printing plate was formed by winding the sheet-like printing original-plate thus obtained around a cylinder and forming a pattern on the original plate by using a carbon dioxide gas laser engraving machine. An engraving residue which had remained a little on the surface of the resulting sheet-like printing plate was washed off by a high-pressure steam jet cleaner. With a solvent ink and a polyethylene film used in combination, printing was performed using a desktop type proof press. As a result, a print with dot patterns printed thereon was obtained and reverse lines in solids were also printed preferably at the initial stage of printing. The solvent ink contained 20 vol.% of ethyl acetate and 80 vol.% of isopropyl alcohol. After having wiped the plate surface with the solvent composed of 20 vol.% of ethyl acetate and 80 vol.% of isopropyl alcohol, printing were repeated, resulting in widening of a dot pattern and unclear printing.
With another sheet-like printing plate formed in the same manner, printing of 10000 m was performed. At the latter stage of printing, "dot gain" and "insufficient printing" were observed.
Separately, a sample for swelling test with solvent was prepared by forming the photosensitive resin composition (xv) into a sheet of 1.7 mm thick on a PET film, covering the sheet with a PET cover film of 15 $\mu$m thick, and exposing the surface of the sheet to a light from a high-pressure mercury lamp in the atmosphere from the side which the photosensitive resin layer appeared. The exposure energy amount was 4000 mJ/cm$^2$ (a time-integrated value of illumination intensity as measured by "UV-35-APR Filter" (trademark, product of ORC Manufacturing Co., Ltd.). The resulting test sample was immersed in a solvent made of 20 vol.% of ethyl acetate and 80 vol.% of isopropyl alcohol and a weight change before and after immersion was measured, resulting in 74 wt.%. A change in film thickness was unmeasurable because of excessive curling.
Further, a sample for tensile test was prepared by forming a sheet-like photocured material of 1 mm thick from the photosensitive resin composition (xv) and punching it out into a dumbbell form. A test portion of the dumbbell form had

a width of 3 mm and a length of 30 mm. As a result of the test, it showed an elongation of 320%, tensile strength of 7.7 $\times 10^6$ Pa, and a 100% modulus of 8 x $10^5$ Pa, showing that it was a considerably tough resin as a material for forming a cushion. The tensile test was performed using "Autograph AGS-J" (trademark, product of Shimadzu Corporation).

Industrial Applicability

The cushioning material for printing according to the present invention is preferably used as a material for manufacturing a cushion for printing or a cushioning layer for a printing plate for improving printing quality in the printing fields such as flexographic printing.
Since the cushioning material for printing according to the present invention is excellent in solvent resistance and mechanical physical properties, it is preferably used also as a material for manufacturing a blanket for printing or a cushioning layer of a member to be used for printing such as ink supply controlling roll.

Brief Description of the Drawings

[FIG. 1] FIG. 1 illustrates an example of compression characteristics of a cushion made of a cured photosensitive resin.

**Claims**

1. A cushioning material for printing having a storage elastic modulus (E') of $1.0 \times 10^8$ Pa or greater at 20°C and 1000 Hz.

2. The cushioning material for printing according to Claim 1, having a loss elastic modulus (E") of $1.0 \times 10^7$ Pa or greater at 20°C and 1000 Hz.

3. The cushioning material for printing according to Claim 1 or 2, having a loss tangent (tanδ) of 0.2 or greater and not greater than 0.6 at 1000 Hz.

4. The cushioning material for printing according to any one of Claims 1 to 3, comprising a cured material of a resin.

5. The cushioning material for printing according to Claim 4, wherein the cured material of a resin is a material obtained by photocuring a photosensitive resin composition (A).

6. The cushioning material for printing according to Claim 5, wherein the photosensitive resin composition (A) is in liquid form at 20°C, comprises organic fine particles (d) having an average particle diameter of 0.1 μm or greater and not greater than 200 μm or air bubbles (e) having an average diameter of 0.1 μm or greater and not greater than 200 μm, and has a viscosity at 20°C of 100 Pa.s or greater and not greater than 50 kPa·s.

7. The cushioning material for printing according to Claim 5 or 6, wherein the photosensitive resin composition (A) comprises a resin (a), an organic compound (b), and a photopolymerization initiator (c).

8. The cushioning material for printing according to Claim 7, wherein the resin (a) has, in the molecule thereof, a carbonate bond.

9. A cushioning material for printing, comprising a photosensitive cured material available by photocuring a photosensitive resin composition (A), wherein:

   the photosensitive resin composition (A) comprises a resin (a), an organic compound (b), a photopolymerization initiator (c), and organic fine particles (d) having an average particle diameter of 0.1 μm or greater and not greater than 200 μm or air bubbles (e) having an average diameter of 0.1 μm or greater and not greater than 200 μm, is in liquid form at 20°C, and has a viscosity at 20°C of 100 Pa·s or greater and not greater than 50 kPa·s;
   the resin (a) is a polymer compound having, in the molecule thereof, at least one bond selected from a carbonate bond and an ester bond and/or having at least one molecular chain selected from an aliphatic saturated hydrocarbon chain and an aliphatic unsaturated hydrocarbon chain, having at least one bond selected from a urethane bond and an amide bond or a urea skeleton, and having a number-average molecular weight of 1000 or greater and not greater than 300000;

the organic compound (b) is a photosensitive resin composition ($\alpha$) having, in the molecule thereof, a polymerizable unsaturated group and having a number-average molecular weight of 100 or greater and less than 1000.

**10.** The cushioning material for printing according to Claim 5, wherein the photosensitive resin composition (A) is the photosensitive resin composition ($\alpha$) as claimed in Claim 9.

**11.** The cushioning material for printing according to Claim 7, wherein the resin (a) is a polymer compound having, in the molecule thereof, a carbonate bond and having a number-average molecular weight of 1000 or greater and not greater than 300000; and
the organic compound (b) has, in the molecule thereof, a polymerizable unsaturated group and having a number-average molecular weight of 100 or greater and less than 1000.

**12.** The cushioning material for printing according to any one of Claims 5 to 11, wherein the photosensitive resin composition (A) has a cure shrinkage after curing by irradiating a light at an integrated amount of 4000 $mJ/cm^2$ at 350 nm of 2% or greater and not greater than 20%.

**13.** The cushioning material for printing according to any one of Claims 6 to 11, wherein the organic fine particles (d) are in the hollow capsule form.

**14.** The cushioning material for printing according to any one of Claims 7 to 13, wherein in $^1H$-NMR spectroscopy (nuclear magnetic resonance spectroscopy using a hydrogen atom as a nucleus to be observed) with tetramethylsilane (TMS) as a reference, the resin (a) comprises hydrogen atoms indicting a peak within chemical shift ranges of from 1.3 to 1.8 ppm, from 4.0 to 4.3 ppm, from 4.5 to 5.5 ppm in an amount of 20% or greater and not greater than 99% of all the hydrogen atoms of the resin (a).

**15.** The cushioning material according to any one of Claims 5 to 14, wherein the photosensitive resin composition (A) further comprises ultrafine particles whose primary particles have an average particle diameter of 10 nm or greater and not greater than 1 $\mu$m.

**16.** The cushioning material for printing according to any one of Claims 1 to 15, having a density of 0.2 $g/cm^3$ or greater and not greater than 0.9 $g/cm^3$.

**17.** A cushion for printing obtained by forming or molding the cushioning material for printing as claimed in any one of Claims 1 to 16 into a hollow cylindrical form.

**18.** A cushion for printing further comprising at least one layer of the cushioning material for printing as claimed in any one of Claims 1 to 16.

**19.** A cushion for printing, comprising a substrate and a layer of the cushioning material for printing as claimed in any one of Claims 1 to 16 on the substrate.

**20.** The cushion for printing as claimed in any one of Claims 17 to 19, wherein a peel adhesion strength between the support and the layer of the cushioning material for printing is 0.03 kg/cm or greater and not greater than 7 kg/cm.

**21.** A printing original-plate or a printing plate comprising a layer of the cushioning material for printing as claimed in any one of Claims 1 to 16.

**22.** The printing original-plate or the printing plate according to Claim 21, on which patterns are formed by laser engraving.

**23.** A printing method, which comprises attaching the cushion for printing as claimed in any one of Claims 17 to 20 or the printing plate as claimed in Claim 21 or 22 on a cylinder of a printing machine which transfers an ink to a printing medium by the rotation of the cylinder, and carrying out printing at a printing speed of 100 m/minute or greater and not greater than 1000 m/minute.

**24.** The printing method according to Claim 23, wherein the printing plate has a surface temperature of 40°C or greater and not greater than 150°C.

**25.** The printing method according to Claim 23 or 24, wherein the printing machine is equipped with a heat source or a

light source.

**26.** A photosensitive resin composition constituting a cushioning material for printing, which comprises:

a resin which is a polymer compound having, in the molecule thereof, at least one bond selected from a carbonate bond and an ester bond and/or having at least one molecular chain selected from an aliphatic saturated hydrocarbon chain and an aliphatic unsaturated hydrocarbon chain, having at least one bond selected from a urethane bond and an amide bond or a urea skeletone, and having a number-average molecular weight of 1000 or greater and not greater than 300000;
an organic compound having, in the molecule thereof, a polymerizable unsaturated group and having a number-average molecular weight of 100 or greater and not greater than 1000,
a photopolymerization initiator, and
organic fine particles having an average particle diameter of 0.1 μm or greater and not greater than 200 μm or air bubbles having an average diameter of 0.1 μm or greater and not greater than 200 μm;

wherein the composition is in liquid form at 20°C; and has a viscosity of 100 Pa·s or greater and not greater than 50 kPa·s.

Fig 1.

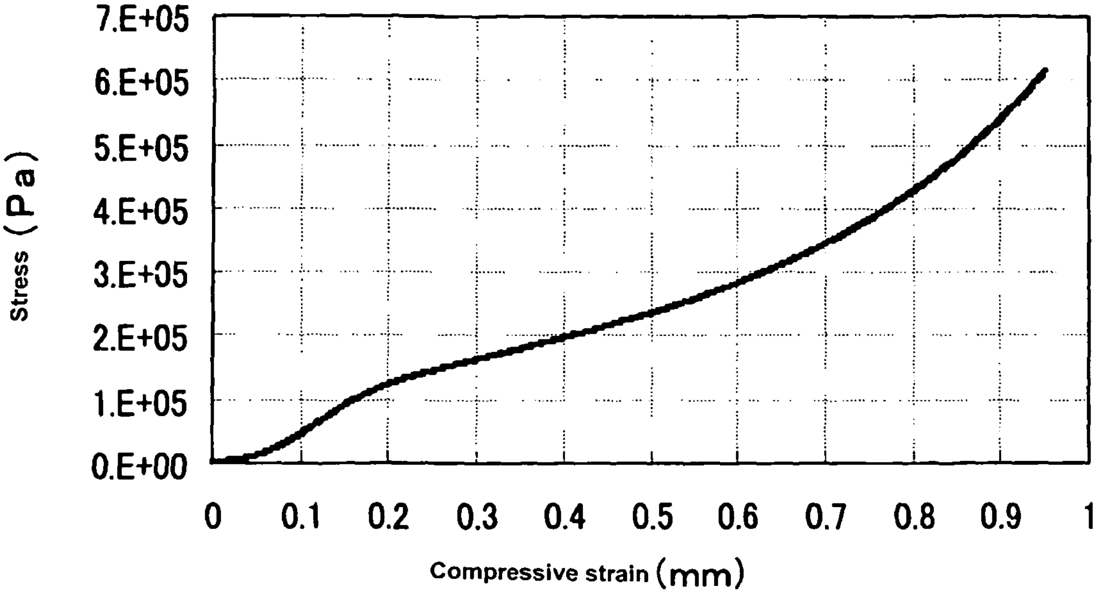
7.E+05
6.E+05
5.E+05
4.E+05
3.E+05
2.E+05
1.E+05
0.E+00
Stress (Pa)
0
0.1
0.2
0.3
0.4
0.5
0.6
0.7
0.8
0.9
1
Compressive strain (mm)

**INTERNATIONAL SEARCH REPORT**

International application No.
PCT/JP2007/059502

A. CLASSIFICATION OF SUBJECT MATTER
*B41N6/00*(2006.01)i, *B41F30/00*(2006.01)i, *B41N7/00*(2006.01)i, *B41N10/00*(2006.01)i

According to International Patent Classification (IPC) or to both national classification and IPC

B. FIELDS SEARCHED

Minimum documentation searched (classification system followed by classification symbols)
B41N6/00, B41F30/00, B41N7/00, B41N10/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| E,X | JP 2007-175953 A (Asahi Kasei Chemicals Corp.), 12 July, 2007 (12.07.07), Full text (Family: none) | 9,11,13,15, 17-19,21,22, 25,26 |
| A | WO 2005/095115 A (Asahi Kasei Chemicals Corp.), 13 October, 2005 (13.10.05), Full text; all drawings & EP 1731325 A | 1-26 |
| A | JP 2004-255811 A (Asahi Kasei Chemicals Corp.), 16 September, 2004 (16.09.04), Full text (Family: none) | 1-26 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 August, 2007 (03.08.07) | 14 August, 2007 (14.08.07) |
| Name and mailing address of the ISA/ Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003519036 PCT
- US 5325776 A
- JP 2005349754 A
- WO 9640528 A
- JP HEI11180065 B
- JP 2004157399 A
- US 5476712 A
- JP 2004255811 A


### Non-patent literature cited in the description


- *Convertech,* August 2006, 23
- **KISOHEN.** Kobunshi Data Handbook. Baifukan, 1986
- Kankosei Kobunshi. Kodansha, 1977, 228